(19) **Europäisches Patentamt / European Patent Office / Office européen des brevets**

(11) **EP 4 143 503 B1**

(12) **FASCICULE DE BREVET EUROPEEN**

(45) Date de publication et mention de la délivrance du brevet:
**04.09.2024   Bulletin 2024/36**

(21) Numéro de dépôt: **21721103.6**

(22) Date de dépôt: **27.04.2021**

(51) Classification Internationale des Brevets (IPC):
**G01B 9/02** *(2022.01)*       **G01B 11/24** *(2006.01)*
**G01B 11/30** *(2006.01)*      **G01B 9/02001** *(2022.01)*
**G01B 9/02015** *(2022.01)*    **G01B 9/02055** *(2022.01)*

(52) Classification Coopérative des Brevets (CPC):
**G01B 11/303; G01B 9/02007; G01B 9/02022; G01B 9/02028; G01B 9/02045; G01B 9/02082; G01B 9/02083; G01B 9/02084; G01B 9/02087; G01B 11/2441**

(86) Numéro de dépôt international:
**PCT/EP2021/060957**

(87) Numéro de publication internationale:
**WO 2021/219620 (04.11.2021 Gazette 2021/44)**

(54) **SYSTEME DE GENERATION DE SIGNAL REPRESENTATIF DU PROFIL D'UNE SURFACE EN MOUVEMENT PAR RAPPORT AU SYSTEME**

SYSTEM ZUR ERZEUGUNG EINES SIGNALS, DAS DAS PROFIL EINER RELATIV ZUM SYSTEM BEWEGTEN OBERFLÄCHE REPRÄSENTIERT

SYSTEM FOR GENERATING A SIGNAL REPRESENTATIVE OF THE PROFILE OF A SURFACE MOVING RELATIVE TO THE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.04.2020   FR 2004162**

(43) Date de publication de la demande:
**08.03.2023   Bulletin 2023/10**

(73) Titulaires:
- **COMPAGNIE GENERALE DES ETABLISSEMENTS MICHELIN**
  **63000 Clermont-Ferrand (FR)**
- **CENTRE NATIONAL DE LA RECHERCHE SCIENTIFIQUE**
  **75794 Paris Cedex 16 (FR)**
- **UNIVERSITE PAUL SABATIER TOULOUSE III**
  **31062 Toulouse Cedex 9 (FR)**
- **Institut National Polytechnique de Toulouse**
  **31029 Toulouse (FR)**

(72) Inventeurs:
- **GRIMALDI, Bastien**
  **20135 CONCA (FR)**
- **COTE, Remi**
  **63040 CLERMONT-FERRAND Cedex 9 (FR)**
- **BREMOND, Florian**
  **63040 CLERMONT-FERRAND Cedex 9 (FR)**
- **BOSCH, Thierry**
  **31500 TOULOUSE (FR)**
- **BONY, Francis**
  **31590 LAVALETTE (FR)**

(74) Mandataire: **M.F.P. Michelin**
  **DCJ/PI - F35 - Ladoux**
  **23 place des Carmes-Déchaux**
  **63040 Clermont-Ferrand Cedex 9 (FR)**

(56) Documents cités:
|  |  |
|---|---|
| EP-A1- 0 208 276 | EP-B1- 0 208 276 |
| FR-A1- 2 750 215 | US-A1- 2011 126 617 |
| US-A1- 2012 167 663 | US-A1- 2018 216 927 |
| US-B2- 8 751 091 | |

- **VERONIQUE CEREZO ET AL: "Mesure de la macrotexture des revêtements routiers à l'aide du Rugo 2 : bilan de dix années d'évolution", REVUE GÉNÉRALE DES ROUTES ET AÉRODROMES (RGRA), vol. 907, 1 January 2012 (2012-01-01), pages 36 - 42, XP055761853**

## Description

### Domaine de l'invention

La présente invention concerne un système de génération de signal représentatif du profil d'une surface en mouvement par rapport au système.

### Arrière-plan technologique

La connaissance du profil d'une surface d'un objet est utile pour plusieurs types d'application. Premièrement lorsque l'objet est en mouvement par rapport à un second objet, la connaissance de ce profil est nécessaire pour assurer la mobilité relative entre les deux objets. En effet, on peut déduire du profil de la surface la rugosité de celle-ci permettant d'adapter par exemple la vitesse relative entre les deux surfaces pour assurer une condition d'adhérence. Secondement lors de contrôle qualité d'un objet, la profilomètrie de la surface est un paramètre mis sous surveillance puisque c'est un signe d'évolution du procédé de fabrication par exemple. En raison de défaut de fabrication mais aussi du vieillissement ou de l'usure en service de la surface d'un objet ou des conditions externes variantes, il est utile de pouvoir avoir accès régulièrement à l'information du profil. Par exemple, dans le domaine du transport terrestre, la connaissance du profil du sol à une échelle millimétrique est importante pour adapter les systèmes de sécurité active du véhicule aux conditions d'adhérence du sol qui est fonction de la rugosité de surface du sol. De même, dans le domaine de la fabrication d'objet, il est utile de mesurer le profil de la surface externe des objets fabriqués pour s'assurer du respect du cahier des charges et adapter le procédé de fabrication en fonction de ce paramètre.

Ainsi, la connaissance en temps réel du profil d'une surface quelconque d'un objet est importante. Pour autant on souhaite des dispositifs de mesure du profil peu intrusifs physiquement par rapport à l'objet à évaluer ou par rapport au dispositif sur lequel il est susceptible d'être monté. De plus, il faut qu'il soit peu impactant sur le fonctionnement actuel des dispositifs afin de ne pas affecter l'efficacité de ces dispositifs. Enfin, il faut qu'il soit potentiellement économe aussi bien à l'achat qu'à l'usage et peu consommateur d'énergie.

Parmi les dispositifs de mesure de la rugosité du sol, le rugolaser permet de mesurer des profils en dynamique. Le principe de mesure repose sur l'utilisation d'une source laser pulsée émise à la verticale en direction de la surface externe à mesurer. La source laser est couplée à une optique de focalisation et un potentiomètre optique de type CCD ou barrette de photorécepteurs. En fonction de la distance laser/cible, l'optique vient focaliser l'image du point d'impact du faisceau laser à une position donnée sur le capteur. En localisant cette position sur le potentiomètre, il est possible de remonter à la hauteur du profil de la cible.

L'inconvénient d'un tel dispositif réside dans l'encombrement en embarqué sur dispositif mobile, son coût d'achat et sa faible flexibilité de mesure par rapport à l'usage du dispositif mobile puisque les réglages du système et l'analyse des mesures nécessitent du temps et le post traitement est généralement fait ultérieurement à la mesure. Il n'est donc pas possible d'obtenir l'information en temps réel.

Parmi les dispositifs de mesure de rugosité de surface en termes de contrôle qualité d'un objet fabriqué, on peut citer les dispositifs d'imagerie et d'éclairage. Cependant, ce type d'équipement n'est pas adapté à un contrôle qualité en continu puisque le temps de traitement consomme du temps de flux et l'objet est généralement en statique ou quasi statique. Bien qu'il permette d'avoir accès à une observation tridimensionnelle de la surface externe de l'objet, ce traitement étant bien adapté à une logique qualité par tri aléatoire des objets, il ne l'est pas pour un contrôle qualité en continu de la totalité des objets.

US8751091B2 concerne un système utilisant des capteurs laser auto-mélangeurs pour déterminer la vitesse d'un véhicule, tel qu'une voiture, et la vitesse de rotation d'une roue de la voiture.

La présente invention porte sur un dispositif de génération de signaux exploitables en temps réel représentatifs du profil d'une surface sur un plan bidimensionnel résolvant à la fois les problèmes rencontrés par les dispositifs de l'état de l'art en matière de temps de réponse, en embarqué sur dispositifs tout en étant peu intrusif et sans impact sur le fonctionnement de l'objet en soi. Enfin certaines variantes de l'invention sont aussi économes en énergie et bon marché.

### Description de l'invention

L'invention est définie dans les revendications indépendantes. Les modes de réalisation de l'invention sont décrits dans les revendications dépendantes.

L'invention porte sur un système de génération d'au moins un signal représentatif du profil d'une surface externe d'un milieu présentant un plan médian et ayant à une vitesse relative V par rapport au système suivant une direction U comprenant :

- Une première source de lumière apte à émettre un premier faisceau gaussien de lumière cohérente et monochromatique dont la longueur d'onde $\lambda 1$ est adaptée aux caractéristiques d'absorption optique du milieu suivant un premier parcours optique
- Un premier capteur apte à évaluer les effets des interférences électromagnétiques entre une partie du premier faisceau de lumière émis et une partie du faisceau rétro diffusé sur la surface externe du milieu du premier faisceau de lumière, et délivrant un signal électrique,
- Au moins un élément optique séparateur situé en amont du premier capteur redirigeant une partie du premier faisceau de lumière situé sur le premier parcours optique, l'autre partie du premier faisceau de lumière est un second faisceau de lumière suivant un second parcours optique,

- Au moins une lentille de focalisation située en amont ou en aval du au moins un élément optique séparateur sur le premier et /ou le deuxième parcours optique permettant de focaliser tout ou partie du faisceau de lumière à une distance de focalisation f et définissant un chemin optique en amont, et
- Un moyen de cheminement du au moins un second faisceau de lumière comprenant au moins un miroir apte à rediriger au moins une partie du second chemin optique en direction du premier chemin optique de sorte que la longueur du premier chemin optique soit différente de la longueur du second chemin optique,

dans lequel les deux chemins optique (11', 12') sont coplanaires, la combinaison de la distance de focalisation (f1, f2) et du chemin optique (11', 12') pour chaque faisceau de lumière définissent deux points géométriques distincts d1 et d2 correspondant aux points de focalisation de chaque faisceau de lumière, la distance entre les points géométriques d1 et d2 est supérieure à la plus grande longueur de Rayleigh des premier et second faisceaux gaussiens de lumière **et** les vecteurs directeurs des premier et second chemin optique (11', 12') définissent un angle θ supérieur ou égal à 3 degrés.

En imposant que les chemins optiques sont coplanaires, on assure que lors de son utilisation, le dispositif imposera que les chemins optiques suivent la même ligne de lecture sur la surface externe. En imposant que les vecteurs directeurs des chemins optiques définissent un angle θ supérieur ou égal 3 degrés on assure une différenciation entre les fréquences Doppler de chaque faisceau de lumière.

Ce dispositif permet de générer un premier signal électrique en sortie du capteur qui traduit les effets des interférences électromagnétiques générées entre le premier faisceau de lumière incident de la première source et le faisceau de lumière rétro diffusé par la surface externe issus du premier faisceau incident. Ici, l'information portant sur une variation de la puissance émettrice de la première source de lumière est suffisante. On entend ici par le terme « faisceau rétro diffusé » que celui-ci correspond au faisceau incident qui est réfléchi et/ou diffusé par la surface externe et qui suit le même parcours optique que le faisceau incident en sens inverse. Ces effets sont aussi modulés par la distance entre le point géométrique d1 où une première partie du faisceau lumineux gaussien se focalise et la surface externe du milieu en raison de la propagation gaussienne du faisceau de lumière. Les deux faisceaux interfèrent en raison de la cohérence spatiale et temporelle entre le faisceau incident et le faisceau rétro diffusé. Les variations observées représentent une succession de phénomènes pilotés par les fréquences harmoniques liés à l'effet Doppler. La fréquence fondamentale de l'effet Doppler dépend à la fois de la vitesse V relative entre le système et la surface externe, de l'angle d'incidence θ du faisceau sur la surface externe par rapport à la normale à la surface externe suivant la direction U et de la longueur d'onde λ du faisceau de lumière. Ainsi, il est nécessaire que l'onde incidente génère un angle d'au moins 1 degrés par rapport à la normale à la surface externe suivant la direction U pour que l'effet Doppler puisse être observé dans le signal. En pratique un angle de 5 degrés permet de s'assurer de l'observation de l'effet Doppler au-delà des imperfections géométriques de tout système optique imparfait et d'obtenir un signal facilement exploitable. En prenant une onde lumineuse monochromatique, on évite les interférences entres les longueurs d'ondes différentes d'une lumière polychromatique rendant aisément visibles les harmoniques de la longueur d'onde monochromatique dans le signal du capteur. On effectue la même opération avec un second faisceau de lumière monochromatique dont la position géométrique d2 par rapport à la surface externe suivant la ligne de lecture décrite par le premier chemin optique est différente de la première position géométrique d1. Les deux positions géométriques d1 et d2 encadrent nécessairement le plan médian de la surface externe du milieu observé afin d'identifier la distance de la surface externe aisément. Ainsi, on récupère deux informations proportionnelles à la distance entre un point géométrique d1 ou d2 déterminé et la surface externe. Bien entendu, il est préférable que la distance entre ces deux points géométriques d1 et d2 soit supérieure à la plus grande longueur de Rayleigh du faisceau gaussien pour obtenir un signal de qualité avec une résolution spatiale adaptée à ce que l'on recherche en termes de discrétisation de la surface externe. En effet, à la longueur de Rayleigh la forme d'un faisceau de lumière est modifiée en augmentant le rayon du faisceau d'un facteur racine de 2. Cette modification du faisceau impactera directement les interférences électromagnétiques entre les faisceaux émis et rétrodiffusé et quantifiera donc la distance à la position focale de chacun des premier et second faisceaux de lumière. Si les deux distances focales sont éloignées d'une distance inférieure à la plus grande longueur de Rayleigh, les faisceaux de lumière ne divergent pas suffisamment pour que l'information de distance entre le point de focalisation et la surface externe soit perçue au niveau du signal de sortie du capteur.

L'information de distance fournie par le second faisceau de lumière est codée dans le même premier signal électrique auquel cas les harmoniques dues à l'effet Doppler doivent être dissociables entre les deux faisceaux de lumière. Cette condition est respectée en imposant un angle θ d'au moins 3 degrés entre les deux chemins optiques qui décalera en fréquence les deux fondamentaux liés à l'effet Doppler sachant que lors de son utilisation avec la surface externe, le dispositif est agencé de sorte que les chemins optiques soient sensiblement perpendiculaires au plan médian. Point important, l'impact de la réflectivité de la surface externe doit être similaire entre les deux faisceaux de lumière, ce qui implique soit qu'ils aient la même longueur d'onde ou soit que leur longueur d'onde, bien que différente, est insensible aux caractéristiques de réflectivité optique de la surface externe du milieu observé.

En ayant une information relative à deux distances de la surface externe par rapport à deux références d1 et d2 suivant la même ligne de lecture, il est possible de remonter par traitement des signaux à un profil bidimensionnel de la surface externe suivant la ligne de lecture quelle que soit la vitesse V relative du système par rapport au milieu. La discrétisation spatiale du profil étant proportionnelle à la fréquence d'échantillonnage du signal et à la vitesse relative V. En adaptant la fréquence d'échantillonnage en fonction de la vitesse V, on peut obtenir la précision spatiale de la discrétisation de la ligne de lecture souhaitée. Ainsi la mesure n'est pas impactée par les conditions d'usage entre le milieu observé et le dispositif accueillant le système et permet une mesure à forte vitesse relative V selon la direction U.

Préférentiellement, le système comprend aussi un amplificateur de signal électrique de type électronique lorsque les amplitudes des signaux délivrés par les capteurs sont faibles notamment en raison de l'étendue de la bande fréquentiel du signal, il convient d'amplifier ces signaux sans perdre d'information.

Enfin, le système ne nécessite pas un réglage complexe puisqu'aucune contrainte d'orientation précise des faisceaux de lumière par rapport à la surface externe n'est demandée, seul l'alignement selon la direction U des deux faisceaux incidents est nécessaire ce qui est satisfait lorsque les chemins optiques des premier et second faisceaux de lumière sont coplanaires. La coplanarité des chemins optiques assure que les deux chemins optiques suivent la même ligne de lecture sur une éventuelle surface externe.

La source de lumière peut être par exemple une source laser comme une diode laser par exemple. Ces sources de type laser génèrent une lumière cohérente, et la propagation de la lumière est aussi naturellement gaussienne. Le capteur doit mesurer les interférences électromagnétiques entre la lumière incidente et la lumière rétrodiffusée par la surface externe. Cela implique d'identifier une zone spatiale ou les deux faisceaux sont alignés, au moins une partie de ceux-ci. Le plus simple consiste à placer le capteur sur le chemin optique entre la source de lumière et la surface. Pour autant, il est tout à fait possible de dévier une partie de l'un de ces faisceaux ou les deux pour les faire coïncider en dehors du parcours optique. Le capteur peut être par exemple une photodiode, un phototransistor ou un capteur d'intensité ou de tension de l'alimentation de la source de lumière.

Le premier dispositif optique et/ou le moyen de cheminement du second faisceau de lumière inclut par exemple des moyens d'orientation d'au moins une partie du système par rapport à la surface externe pour orienter au moins en partie les angles d'incidence du premier et/ou second faisceau de lumière par rapport à la surface externe.

On entend par le terme « faisceau gaussien » que la propagation de la lumière dans la sens de propagation du faisceau est de type gaussien.

On entend par le terme « parcours optique », la succession des positions spatiales contiguës suivies par le faisceau de lumière entre une source de lumière ou un moyen de génération d'un faisceau de lumière et la surface externe du milieu observé.

On entend par le terme « chemin optique » au moins une partie d'un parcours optique entre la dernière lentille de focalisation du faisceau de lumière avant la surface externe et le point le plus éloigné entre la surface externe et le point de focalisation du faisceau de lumière.

Selon un premier mode de réalisation du système, la au moins une première lentille de focalisation se situant en amont du premier dispositif optique, le premier dispositif optique et le moyen de génération de au moins un second faisceau sont mutualisés et comprend un élément optique séparateur situé sur le premier parcours optique du premier faisceau de lumière, le au moins un second faisceau de lumière est l'autre partie du premier faisceau de lumière, le moyen de cheminement de au moins un second faisceau de lumière comprend au moins un miroir et les projections des angles d'incidences $\theta1$ et $\theta2$ sur ladite surface externe des premier et second chemins optiques sont différents. Quel que soit le mode de réalisation, l'angle $\theta$ formé par la différence des deux angles d'incidence $\theta1$ et $\theta2$ doit être d'au moins 3 degrés, ce qui assure de pouvoir dissocier les fondamentaux et potentiellement les harmoniques dans l'unique signal électrique.

Ici, on traite du cas où la première source de lumière est unique. Alors, il convient de séparer l'énergie lumineuse du premier faisceau de lumière en deux faisceaux d'énergie semblables. Pour cela un simple élément optique séparateur suffit à cette fonction qui permet de générer un second faisceau gaussien de lumière cohérente et monochromatique à la même longueur d'onde $\lambda1$. La première lentille de focalisation étant située avant l'élément optique séparateur, les deux faisceaux de lumière ont la même distance focale f1. Afin d'obtenir deux informations de distance, il faut différentier la longueur des deux chemins optiques entre la lentille de focalisation et la surface externe d'une longueur d1-d2 de façon que les deux points géométriques se retrouvent de part et d'autre de la surface externe lors de son utilisation avec une surface externe. Ceci est au moins assuré par l'intermédiaire d'un jeu de miroirs qui redirige le second faisceau de lumière vers la surface externe et génère une modification du cheminement optique de la lumière sur le second chemin optique par rapport au premier chemin optique. Enfin, comme les informations de distance sont codées sur le même signal électrique et que la longueur d'onde est unique, les angles d'incidences des deux chemins sont différents pour dissocier dans le spectre de réponse du signal électrique les harmoniques liées à l'effet Doppler correspondant au premier et second faisceaux de lumière.

Selon un autre mode de réalisation préférentielle du système, la au moins une première lentille de focalisation se situant en aval du premier dispositif optique sur le premier parcours optique, le premier dispositif optique et le moyen de génération de au moins un second faisceau sont mutualisés et comprend un élément optique séparateur situé sur le premier parcours optique du premier faisceau de lumière, le au moins un second faisceau de lumière est l'autre partie du premier faisceau de lumière, le moyen de génération de au moins un second faisceau laser comprend au moins une deuxième lentille de focalisation à une distance de focalisation f2 située en aval du premier dispositif optique et les projections des angles d'incidences θ1 et θ2 sur ladite surface externe des premier et second chemins optiques sont différents. L'angle θ formé par la différence des deux angles d'incidence θ1 et θ2 doit être d'au moins 3 degrés, ce qui assure de pouvoir dissocier les fondamentaux et potentiellement les harmoniques Doppler de chaque faisceau dans l'unique signal électrique.

Ici, on traite encore du cas où la première source de lumière est unique. Alors, il convient de séparer l'énergie lumineuse du premier faisceau de lumière en deux faisceaux d'énergie semblable. Pour cela un simple élément optique séparateur suffit à cette fonction qui permet de générer un second faisceau de lumière à la même longueur d'onde λ1. Si la première lentille de focalisation se trouve en aval de l'élément séparateur, c'est-à-dire que le premier faisceau de lumière n'est pas focalisé avant l'élément optique séparateur, il convient alors, ayant séparé le premier faisceau de lumière en deux pour générer un second faisceau de lumière, de focaliser le second faisceau de lumière à l'aide d'une seconde lentille de focalisation. Eventuellement, la distance de focalisation f2 de cette seconde lentille de focalisation est différente de la première. Si elle est similaire, il faut différencier la longueur des premier et second chemins optiques en modifiant le chemin optique des deux faisceaux pour définir deux points géométriques d1 et d2 différents. Enfin, comme les informations de distance sont codées sur le même signal électrique et que la longueur d'onde est unique, les angles d'incidences des deux chemins sont différents pour dissocier dans le spectre de réponse du signal électrique les harmoniques correspondant au premier et second faisceaux de lumière.

Préférentiellement, dans le cas d'une utilisation du dispositif avec un milieu à étudier présentant une surface externe présentant un plan médian, le rapport entre les projections dans le plan défini par la direction U et la normale au plan médian des angles d'incidences θ1 et θ2 sur ladite surface externe des premier et second chemins optiques est compris entre 1,2 et 1,8.

Les angles d'incidence des premier et second chemins optiques sur la surface doivent être différents pour dissocier les informations portées par chaque chemin lorsque les informations sont codées sur un seul signal électrique. De plus, si on cherche à suivre plusieurs harmoniques de chaque faisceau de lumière, il convient que le rapport des fréquences générés par les angles, généralement petit, ne soit pas un multiple entier l'un de l'autre. Enfin, afin que l'analyse des signaux ne soit pas trop large bande, il faut que l'éloignement fréquentiel des harmoniques générées par les angles d'incidence soit suffisant pour dissocier les fréquences sans une discrétisation trop fine de l'unique signal. Toutes ces contraintes conduisent à la gamme revendiquée.

Préférentiellement, dans le cas d'une utilisation du dispositif avec un milieu à étudier présentant une surface externe présentant un plan médian, les premier et second chemins optiques ne se croisent pas avant d'avoir atteint la surface externe du milieu.

Dans le cas où une seule source de lumière est employée, les premier et second faisceaux de lumière sont cohérents entre eux. Par conséquent, ces premiers et seconds faisceaux de lumière sont susceptibles d'interférer électromagnétiquement entre eux que cela soit sur les parcours incidents ou rétro diffusés. Ces interférences peuvent altérer la qualité du signal mesuré par le capteur et donc induire une erreur sur la qualité des signaux du capteur. En assurant la condition ci-dessus, on minimise le risque de créer des interférences électromagnétiques parasites entre les premier et second faisceaux de lumière, ce qui améliore la qualité des signaux de sortie du capteur et par voie de conséquence la mesure du profil de la surface externe du milieu. Enfin, l'amélioration du signal de mesure, par cette condition, est assurée potentiellement sur les deux chemins optiques.

Préférentiellement, dans le cas d'une utilisation du dispositif avec un milieu à étudier présentant une surface externe présentant un plan médian la longueur de cohérence du premier faisceau laser et ou du second faisceau laser est au moins supérieure à deux fois la plus grande longueur des premier et second parcours optiques incidents jusqu'à la surface externe du milieu.

L'information utile est obtenue par l'observation des interférences électromagnétiques entre le faisceau de lumière incident et le faisceau rétro diffusé sur la surface externe du milieu du faisceau de lumière incident. Il faut nécessairement que le capteur soit localisé dans une zone géographique où les faisceaux incident et rétro diffusé sont cohérents entre eux pour interférer. Bien que le capteur puisse être déporté par rapport au chemin optique incident, il est souvent plus commode de positionner le capteur sur le parcours optique incident. Comme le faisceau rétrodiffusé doit parcourir au minimum une fois le parcours optique incident pour être généré, la condition de longueur mentionnée assure de pouvoir positionner le capteur en tout lieu du parcours optique de plus grande longueur.

Préférentiellement, dans le cas d'une utilisation du dispositif avec un milieu à étudier présentant une surface externe présentant un plan médian les angle d'incidence θ1 du premier faisceau et θ2 du second faisceau de lumière sont compris dans un cône dont l'axe de révolution est la normale au plan médian de la surface externe et l'angle d'ouverture du cône est inférieur ou égal à 45 degrés, préférentiellement inférieur ou égal à 30 degrés.

Quel que soit le mode de réalisation, on souhaite observer le profil de la surface externe d'un milieu. Idéalement, l'angle d'incidence est suivant la normale au plan médian ce qui permet d'observer tout profil de surface convexe. Dans les faits, le système impose au moins une certaine inclinaison dans le plan de déplacement relatif du système par rapport à la surface externe pour observer les effets Doppler. Cette faible inclinaison gêne peu l'observation d'une surface convexe. Cependant, si l'inclinaison est plus forte et ce quelle que soit l'orientation du faisceau de lumière, certaine zone de la surface externe convexe ne pourront être observées, ce seront des zones masquées par les zones situées supérieurement à la zone masquée de la surface externe. En imposant une inclinaison maximale de 45°, on minimise ces zones masquées de la surface de lecture. Préférentiellement, l'angle d'ouverture du cône devrait être inférieur à 30 degrés ce qui permet de diminuer par deux la surface masquée tout en autorisant des angles d'inclinaison différenciés acceptables même dans le cas d'un unique premier capteur.

Très préférentiellement, le premier capteur est compris dans le groupe comprenant phototransistor, photodiode, ampèremètre et voltmètre

Plusieurs technologies de capteur peuvent être employées pour évaluer globalement les variations temporelles des interférences électromagnétiques entre les ondes cohérentes monochromatiques du faisceau incident et du faisceau rétrodiffusé, comme par exemple ceux évaluant la puissance lumineuse. Si, l'alimentation de la source de lumière n'est pas figée et que les interférences sont générées jusqu'à la source de lumière, des variations de consommation de la source, par exemple laser, peuvent apparaitre sur le signal de l'alimentation. Ainsi, un ampèremètre ou un voltmètre de forte résolution permet d'observer les faibles variations électriques au point d'alimentation électrique de la source de lumière. Cela fonctionnera bien pour des dispositifs électriques spécifiques et lorsque les sources monochromatiques sont distinctes.

Plus classiquement, le système peut être équipé comme capteur d'une photodiode ou d'un phototransistor. Ces types de capteur de lumière seront capables d'observer les variations temporelles de lumière cohérente monochromatique générées par les interférences et ce indépendamment du circuit d'alimentation d'énergie de la source de lumière.

De plus, ce sont des éléments standards du packaging des diodes lasers ce qui rend ces dispositifs peu coûteux et facile de mise en oeuvre. Enfin, comme on souhaite qu'une onde rétro diffusée à la même longueur d'onde s'aligne avec l'onde du faisceau incident, les diodes lasers classiques de part leur cavité optique dédiée pour amplifier la lumière assure cette fonction si l'interface optique permet la transmission de l'onde réfléchie. C'est le cas des diodes lasers standard qui ont aussi un faible coût de revient. En effet dans les diodes lasers sophistiquées on recherche plutôt à minimiser voire empêcher les ondes réfléchies de pénétrer dans la cavité optique de la diode nécessitant des traitements optiques de surfaces au niveau des interfaces optiques externes.

Avantageusement, la longueur d'onde du premier et du second faisceaux de lumière est comprise entre 200 et 2000 nanomètres, préférentiellement entre 400 et 1600 nanomètres.

Le dispositif selon l'invention consiste à focaliser les premier et second faisceaux de lumière vers la surface externe du milieu à observer. En raison de la nature même des systèmes optiques, on obtient en général une tache dite d'Airy d'une certaine dimension à la distance de focalisation en raison des phénomènes physiques de diffraction de la lumière. Or, la dimension de cette tache concentrique est directement proportionnelle à la longueur d'onde du faisceau de lumière. En employant des longueurs d'onde de la lumière visible en général, on obtient des dimensions de taches raisonnables qui permettent une résolution spatiale de la surface externe suivant la ligne de lecture qui convient aux applications recherchées. Bien entendu, plus la longueur d'onde est petite, le bleu ou le violet ou l'ultraviolet, plus la dimension de la tâche d'Airy est petite, augmentant ainsi la résolution de la ligne de lecture dont l'épaisseur, suivant la direction perpendiculaire à la ligne de lecture, est aussi proportionnelle à la longueur d'onde. En revanche, fonctionner dans le rouge ou les infrarouges génère une précision métrique moindre mais qui peut rester convenable suivant l'application et selon les critères de résolution recherchés.

Spécifiquement, la première source de lumière est une diode laser.

Comme déjà évoqué, c'est par nature une source de lumière monochromatique, cohérente dont la propagation du faisceau de lumière est de type gaussien lorsque la diode laser fonctionne à son seuil. De plus, la diode comprend une cavité optique qui peut être le siège idéal de l'observation des interférences électromagnétiques entre le faisceau incident et le faisceau rétro diffusé si l'interface optique externe permet la transmission des ondes rétrodiffusées. A ce moment-là, la cavité optique servant de milieu amplificateur à la génération de la lumière, tout capteur de puissance lumineuse délivrera un signal facilement exploitable par le principe du self mixing, qui est le terme anglais pour la rétroinjection optique. Enfin, le packaging d'une diode laser est compact et bon marché. De ce fait, c'est une solution économique répondant parfaitement au besoin.

L'invention porte aussi sur un dispositif statique ou mobile équipé d'un système de génération d'au moins un signal représentatif du profil d'une surface externe d'un milieu.

En effet, le système ne couvre que les aspects essentiels de la mesure. Le système peut donc être installé sur un dispositif permettant l'intégration du système dans l'environnement de fonctionnement souhaité. Ainsi, ce dispositif peut être mobile comme par exemple un véhicule terrestre se déplaçant par rapport au sol. Le sol est alors le milieu d'observation du système de mesure. Le dispositif peut aussi être statique comme un poste industriel pour faire du contrôle d'aspect linéique par rapport au défilement d'objets sur une bande transporteuse. Le système installé sur un dispositif mobile ou statique peut aussi observer les mouvements de rotation d'un milieu par rapport au dispositif afin d'analyser les défauts d'uniformité de la surface externe de ce milieu.

L'invention porte aussi sur un procédé d'obtention du profil de la surface externe d'un milieu comprenant les étapes suivantes :

- Récupérer le signal électrique d'un capteur issu de l'utilisation, avec un milieu extérieur ayant une surface externe présentant un plan médian, d'un système de génération d'au moins un signal représentatif du profil d'une surface externe d'un milieu, associés aux positions géométriques d1 et d2 situés de part et d'autre du plan médian pour, à chaque instant, la même cible géométrique sur la ligne de lecture de la surface externe ;

- Extraire du signal électrique du capteur le au moins un signal associé au faisceau de lumière défini par son angle d'incidence $\theta$ en filtrant sélectivement le signal électrique autour du fondamental et/ou des harmoniques de la fréquence Doppler associés au dit faisceau de lumière pour obtenir un signal temporel ;

- Déterminer au moins une fréquence Doppler associée à chaque signal temporel A et B ;

- Echantillonner chaque signal temporel A et B à une fréquence supérieure à 2 fois, préférentiellement 10 fois, la au moins une fréquence Doppler pour obtenir un signal utile ;

- Déterminer une enveloppe du signal utile de chaque signal A et B ;

- Effectuer une combinaison relative entre les enveloppes de chaque signal A et B pour obtenir une fonction F monotone et bijective ; et

- Déterminer le profil de la surface externe à l'aide d'une calibration de la fonction F

L'information étant codée sur le même signal électrique en sortie du capteur, il convient d'extraire de ce signal la réponse du fondamental éventuellement celles des harmoniques de la fréquence Doppler, de chaque faisceau de lumière.

Ici, il faut tout d'abord avoir deux signaux temporels correspondant à chaque instant à la réponse du même point géométrique de la ligne de lecture sur la surface externe du milieu observé. L'information de distance est portée par le fondamental et les harmoniques de la fréquence Doppler. Par conséquent, il convient sur chaque signal de déterminer la fréquence Doppler. Celle-ci dépend à la fois de la vitesse relative V de déplacement dans la direction U entre le système et le milieu observé. Mais aussi, elle dépend de l'angle d'incidence $\theta$ par rapport à la normale au plan médian de la surface externe. Enfin, la fréquence Doppler est aussi fonction de la longueur d'onde $\lambda$ du faisceau de lumière. En connaissant l'ensemble de ces paramètres, on peut théoriquement déterminer la fréquence Doppler, son fondamental. Une autre solution consiste à analyser en fréquence le signal temporel pour déterminer la fréquence et ses harmoniques qui doivent aussi émerger de l'analyse fréquentielle du signal.

Ainsi, il est important que la fréquence d'échantillonnage des signaux temporels soit au moins supérieure à 2 fois la fréquence Doppler pour que le signal utile porte une information assurément fiable (traitement des signaux -Théorème de Shannon) sur le fondamental de la fréquence Doppler. Cependant selon les applications, l'information peut aussi être portée par les premières harmoniques de l'effet Doppler, il est alors préférable d'échantillonner suffisamment pour avoir une information fiable sur les harmoniques successives.

Ensuite pour extraire l'information de distance sur le signal utile, il faut tout d'abord extraire l'enveloppe du signal utile qui représente les variations extrêmes temporelles des interférences électromagnétiques enregistrées. Cette enveloppe peut être construite sur la valeur minimale du signal utile ou sur la valeur maximale du signal utile. En variante, on peut aussi prendre la valeur maximale de la valeur absolue de l'enveloppe qui oscille généralement autour de la valeur nulle. Ici, c'est l'information générale qui porte l'information utile ce qui justifie de prendre l'enveloppe du signal.

Enfin, la dernière étape est la détermination du profil suivant la ligne de lecture de la surface externe. Pour cela, on crée une fonction F bijective comme étant une combinaison mathématique en relatif des enveloppes des signaux issus des deux parcours optiques. L'avantage de la combinaison mathématique relative est qu'une étape de calibration peut être effectuée a priori à l'ide d'une cible représentative de la nature des milieux que l'on souhaite mesurer. La calibration ne nécessite pas alors d'employer des conditions similaires à la mesure souhaitée mais seulement de s'assurer de la proportionnalité des réponses entre les deux signaux. Le résultat de cette combinaison donne une grandeur qui au travers d'une fonction F monotone et bijective traduit une et une seule distance E relativement à un point de référence grâce à l'étape de calibration de la fonction F malgré que cette calibration n'ait pas été effectuée sur le milieu de mesure. Ainsi, on assure une mesure en temps réel du profil de la surface externe du milieu. Les variations de la distance E entre les points de la ligne de lecture permettent de générer automatiquement le profil de cette même ligne de lecture, ce qui permet un traitement en temps réel du profil puisque cela nécessite peu de ressources de calcul.

Selon un mode de réalisation particulier, l'étape d'obtention de deux signaux temporels A et B pour la même cible géométrique de la ligne de lecture comprend les étapes suivantes :

- Obtenir deux signaux temporels A et B pour, à chaque instant, deux cibles géométriques distinctes sur la ligne de lecture de la surface externe ;

- Etablir la distance X sur le plan médian suivant la direction U entre les deux cibles géométriques de la ligne de lecture ;

- Déterminer la vitesse relative V selon la direction U entre le système de génération et la surface externe ;

- Déterminer le décalage temporel dT entre les deux faisceaux de lumière associé à la distance X et la vitesse V ; et

- Appliquer au moins une partie du décalage temporel dT au signal temporel A et/ou au signal temporel B.

Le système de génération des signaux représentatifs du profil de la surface externe ne phase pas forcément les premier et second chemins optiques. Dans ce cas, cette étape préparatoire des signaux est indispensable pour l'obtention de deux signaux temporels du même point de la ligne de lecture de la surface externe de manière robuste et fiable.

Avantageusement, la calibration de la fonction F s'effectue à l'aide d'au moins une cible blanche et rugueuse, dont la rugosité de surface est supérieure à la longueur d'onde de la lumière des premier et second faisceau de lumière.

L'utilisation de la fonction F, combinaison mathématique relative des enveloppes des signaux A et B nécessite une phase de calibration de cette fonction F. Cette calibration peut être effectuée à l'aide d'une cible spécifique que l'on déplace de manière métrologique par rapport au système de génération des signaux de sorte que la surface externe de la cible reste entre les points géométriques d1 et d2 du système de génération des signaux représentatifs. Cette cible doit avantageusement être blanche et rugueuse. On entend ici par le terme « blanche » que la surface externe de la cible doit rétro diffuser plus de lumière, à la longueur d'onde du système de génération, qu'elle en absorbe. Et la quantité rétrodiffusée doit être aussi avantageusement au moins égale ou au-dessus du niveau de lumière rétro diffusée par la surface externe du milieu que l'on souhaite mesurer, ce qui garantit la proportionnalité de la réponse quel que soit le milieu à observer. Il est aussi nécessaire que cette cible ait une surface externe rugueuse afin de rétro diffuser la lumière et non seulement la réfléchir comme le ferait un miroir optique. Enfin il convient que la rugosité de surface de la cible soit supérieure à la longueur d'onde de la lumière des premier et second faisceaux de lumière. En effet, si les rugosités de surfaces ne sont pas supérieures à la longueur d'onde, la surface va se comporter comme un miroir à la longueur d'onde en question, et donc minimiser la rétrodiffusion. De plus, le phénomène de speckle, c'est-à-dire le phénomène de tavelure électromagnétique et en particulier optique, ne sera pas présent si la condition de rugosité n'est pas respectée, et il le faut pour pouvoir caractériser optionnellement le bruit de speckle, ou bruit de tavelure, c'est-à-dire le bruit généré par le phénomène de tavelure électromagnétique, tout en étant comparable à celui des cibles qu'on compte mesurer.

Préférentiellement, lequel l'étape de génération du signal utile comprend l'étape suivante :

- Filtrer par un fenêtrage fréquentiel chaque signal utile autour de la au moins une fréquence Doppler ;

Très préférentiellement, l'étape de génération du signal utile emploie un fenêtrage fréquentiel entre 0,7 et 1,3 fois la fréquence Doppler

Il est possible bien que non nécessaire de filtrer le signal temporel autour de la fréquence Doppler qui porte l'information utile pour isoler un signal temporel utile mettant en évidence les interférences électromagnétiques. L'incertitude sur la fréquence Doppler exacte conduit naturellement à réaliser un filtrage sélectif autour de la fréquence Doppler déterminée. L'incertitude potentielle sur la détermination de la fréquence Doppler conduit à filtrer le signal sur une largeur liée à la fréquence Doppler, le fenêtrage compris entre 0,7 et 1,3 fois la fréquence Doppler déterminée permet à la fois de couvrir l'incertitude sur la fréquence Doppler tout en se focalisant sur le seul fondamental qui généralement porte une information suffisante.

Préférentiellement, l'étape de détermination de la fréquence Doppler s'effectue par :

- Une transformée de fourrier du signal utile ; ou

- L'application d'une formule théorique prenant en compte la vitesse relative V suivant la direction U entre le système de génération et la surface externe, l'angle d'incidence θ du faisceau émis sur le plan médian de la surface externe et la longueur d'onde λ du faisceau de lumière définie comme suit :

$$f = \frac{2*V*\sin(\theta)}{\lambda} \; ;$$

ou

- Une analyse temporelle du signal temporel pour détecter la période entre deux créneaux ou la longueur du créneau.

Ces trois méthodes permettent de déterminer une fréquence Doppler du signal temporel. La deuxième méthode consiste simplement à évaluer théoriquement la fréquence Doppler en connaissant les caractéristiques techniques du système de génération. La première méthode effectue une transformée de Fourrier du signal temporel pour extraire la fréquence fondamentale qui émerge du spectre fréquentiel. Si le nombre d'échantillon du signal temporel est un multiple de 2, une transformée de Fourier rapide peut être effectuée ce qui permet un traitement accéléré de la fonction. Dans la troisième méthode, il convient d'analyser un échantillon temporel du signal afin de détecter les franges et notamment l'espacement entre des franges consécutives pour en déduire la fréquence Doppler. Bien entendu, on peut utiliser conjointement plusieurs de ces méthodes pour converger rapidement vers la fréquence Doppler du signal. Toutes ces méthodes peuvent s'effectuer en embarqué sur le dispositif où est installé le système de génération en minimisant les ressources de calcul ou de mémoire.

Préférentiellement, l'étape de détermination de l'enveloppe du signal utile s'effectue sur la valeur absolue du signal utile.

Le demandeur a constaté que la détermination de l'enveloppe sur le signal utile lorsque celui-ci correspond à la valeur absolue du signal utile apporte un gain en robustesse au procédé de détermination du profil de la surface externe. En effet, le signal utile oscille autour de la valeur nulle, le fait de prendre la valeur absolue élimine les perturbations liées aux phasages des deux signaux utiles ce qui améliore la prédiction de la distance d de la surface externe du milieu.

Très préférentiellement, l'étape de détermination de l'enveloppe de chaque signal utile comprend une étape de nettoyage du bruit de speckles, c'est-à-dire le bruit de tavelure, sur l'enveloppe déterminée.

En effet, il est souvent préférable d'éliminer de l'enveloppe déterminée, les effets speckles, c'est-à-dire les effets produits par le bruit de tavelure, générés par l'effet Doppler et les signaux parasites de la rétro diffusion de lumière. A cet effet, des filtres spécifiques sont à employer comme les filtres Lee Sigma ou gamma Map qui sont très efficaces pour nettoyer la signature retenue. Ce nettoyage améliore la prédiction du profil de la surface externe du milieu en minimisant le bruit sur le signal utile. Le nettoyage sur l'enveloppe permet d'atténuer statiquement le bruit de mesure tout en déterminant les paramètres de ce nettoyage a priori, ce qui permet une exploitation en temps réel et embarquée du profil de la surface externe.

Préférentiellement, l'étape de nettoyage du bruit de speckle, c'est-à-dire du bruit de tavelure, sur l'enveloppe du signal comprend les étapes suivantes :

- Déterminer une taille de fenêtre temporelle et un taux de recouvrement entre des fenêtres contigües associés à une méthode de filtrage sur le système de génération des signaux temporels A et B ;

- Découper l'enveloppe déterminée par un nombre entier N de fenêtres

- Déterminer une grandeur caractéristique à chaque fenêtre comme étant une moyenne des valeurs pondérées de l'enveloppe contenues dans ladite fenêtre ; et

- Définir l'enveloppe nettoyée de chaque signal comme étant la succession des grandeurs caractéristiques de chaque fenêtre.

Afin de permettre une exploitation en temps réel du procédé d'obtention du profil de la surface externe, il convient d'effectuer des opérations simples sur les signaux temporels issus de la mesure. Après avoir défini la méthode de filtrage employée qui est fonction à la fois de la nature de la surface externe du milieu à mesurer et du système de mesure employé, on découpe l'enveloppe en une multitude de fenêtres dont la taille est adaptée au bruit de speckle avec ou sans un recouvrement des fenêtres entre elles selon la méthode de filtrage employée. Pour chaque fenêtre qui correspond à l'utilisation d'un espace mémoire limitée, on calcule une moyenne des valeurs de l'enveloppe de la fenêtre. Ces valeurs sont potentiellement pondérées en cas de recouvrement entre les fenêtres contigües. Le signal reconstitué par les grandeurs caractéristiques de chaque fenêtre forme l'enveloppe nettoyée du bruit de speckle.

Très préférentiellement, la méthode de filtrage de l'étape de nettoyage du bruit de speckle, c'est-à-dire du bruit de tavelure, est comprise dans le groupe comprenant GammaMAP et Sigma.

Ce sont des méthodes de filtrage dont l'efficacité pour caractériser des rugosités de surface externe millimétrique est suffisante en employant les systèmes de génération des signaux divulgués dans l'invention.

Avantageusement, la détermination de la taille temporelle des fenêtres de filtrage et le taux de recouvrement entre des fenêtres contigües s'effectue lors d'une étape de la calibration du bruit de speckle, c'est-à-dire du bruit de tavelure, comprenant les étapes suivantes :

- Employer une cible blanche et rugueuse dont la rugosité de surface est supérieure à la longueur d'onde du premier et second faisceaux de lumière.

- Pour au moins une position connue de la cible par rapport au système de génération du signal représentatif ;

  ▪ Déterminer l'enveloppe d'au moins un des signaux A et B ;

   ▪ Transformer l'enveloppe dans le domaine fréquentiel pour obtenir une distribution ;

- Moyenner la au moins une distribution pour définir une distribution gaussienne de speckle, c'est-à-dire une distribution gaussienne de tavelure, liée au système de génération ;

- Définir au moins un bruit fréquentiel de speckles, c'est-à-dire un bruit fréquentiel de tavelure, comme le produit de la distribution gaussienne de speckle, c'est-à-dire la distribution gaussienne de tavelure, par un bruit aléatoire uniformément distribué entre 0 et 1 ;

- Appliquer le au moins un bruit de speckle, c'est-à-dire bruit de tavelure, à un profil théorique pour obtenir au moins un profil théorique bruité ; et

- Déterminer la taille de fenêtre temporelle et le taux de recouvrement en minimisant l'écart entre le profil théorique et le au moins un profil théorique bruité par analyse statistique.

En effet, l'amplitude de l'enveloppe est à la fois la combinaison de la réflectivité de la surface externe du milieu au point d'impact des faisceaux de lumière, de la distance entre le point d'impact sur la surface externe et le point de focalisation du faisceau de lumière et d'un bruit de type speckle. Ce bruit de speckle, ou bruit de tavelure, est lié à la fois aux angles d'incidence des faisceaux de lumière et de la distance entre la surface externe et les deux points géométriques d1 et d2. De ce fait, le bruit de speckle, ou bruit de tavelure, est directement lié à l'agencement du système de génération des signaux. Le modèle mathématique du bruit de speckle, ou bruit de tavelure, peut être le produit d'une distribution fréquentielle gaussienne par un bruit uniformément réparti entre 0 et 1. Ce bruit uniformément réparti est statiquement aléatoire, il convient donc juste d'identifier la bonne distribution gaussienne des fréquences du bruit de speckle, ou bruit de tavelure, par calibration du système de génération. Comme la distribution gaussienne est d'une certaine largeur fréquentielle, il convient de prendre une fenêtre temporelle suffisante pour ne pas amputer l'opération de nettoyage d'une erreur liée à la transformation temporelle/fréquentielle des signaux. Cela revient à moyenner le signal temporel de l'enveloppe déterminée sur une temps suffisamment long pour être représentatif statiquement du bruit de speckle, ou bruit de tavelure, lié au système de génération. La première phase est de quantifier le bruit de speckle, ou bruit de tavelure, sur les réponses des signaux du système de génération. Pour cela, l'analyse d'un seul parcours de lumière peut être faite sur une seule position de la cible. Cependant, il est préférable de multiplier les positions de la cible et d'analyser les divers signaux du système de génération. Après avoir obtenu une multitude d'enveloppes, on détermine une distribution gaussienne de ces enveloppes par une technique de moyennage des diverses distributions obtenues. La seconde étape consiste à créer une multitude de profils bruités à partir d'un profil théorique en générant une multitude de bruit de speckle, ou bruit de tavelure, associé au système de génération. Enfin, on détermine la taille de fenêtrage temporelle optimale et le taux de recouvrement entre les fenêtres contigües à l'aide d'une analyse statistiques sur l'ensemble des profils bruités en comparaison avec un profil théorique connu en choisissant les paramètres qui minimisent les écarts sur l'ensemble de la population des profils bruités.

Avantageusement, l'étape de combinaison des enveloppes nettoyées comprend la différence des enveloppes nettoyées exprimées en échelle logarithmique.

Le demandeur a constaté que cette mise en forme de la combinaison mathématique des enveloppes nettoyées permettait d'améliorer la sensibilité de la fonction F, ce qui améliore la précision sur l'évaluation de la distance d de la surface externe du milieu. Du fait de la propagation gaussienne des faisceaux de lumière et de ce fait de la puissance rétrodiffusée, l'échelle logarithmique permet de linéariser la puissance lumineuse rétrodiffusée en fonction de la distance par rapport au point de focalisation du faisceau de lumière. La fonction F est linéaire de façon plus indépendante de la position des points géométriques et de la focalisation des faisceaux de lumière au niveau des points géométriques.

**Description brève des dessins**

L'invention sera mieux comprise à la lecture de la description qui va suivre dans le cas d'une application de type dispositif fixe et milieu observé en mouvement. Cette application est donnée uniquement à titre d'exemple et faite en se référant aux figures annexées dans lesquelles :

- La Fig 1 est un premier exemple d'un premier mode de réalisation d'un système de génération selon l'invention.

- La Fig 2 est un second exemple préféré du premier mode de réalisation selon l'invention.

- La Fig 3 est un synoptique de la méthode d'évaluation du profil de la surface externe d'un milieu à l'aide de signaux issus du système de génération de l'invention.

- Les Fig 4a à 4f illustrent les diverses étapes et la qualité de la méthode d'évaluation du profil d'une surface externe en dynamique et en temps réel.

## Description détaillée de modes de réalisation

Pour la mise en oeuvre de l'invention, il convient tout d'abord de définir un système optique permettant de générer deux faisceaux de lumière dont le point de focalisation est situé de part et d'autre de la surface externe que l'on souhaite observer.

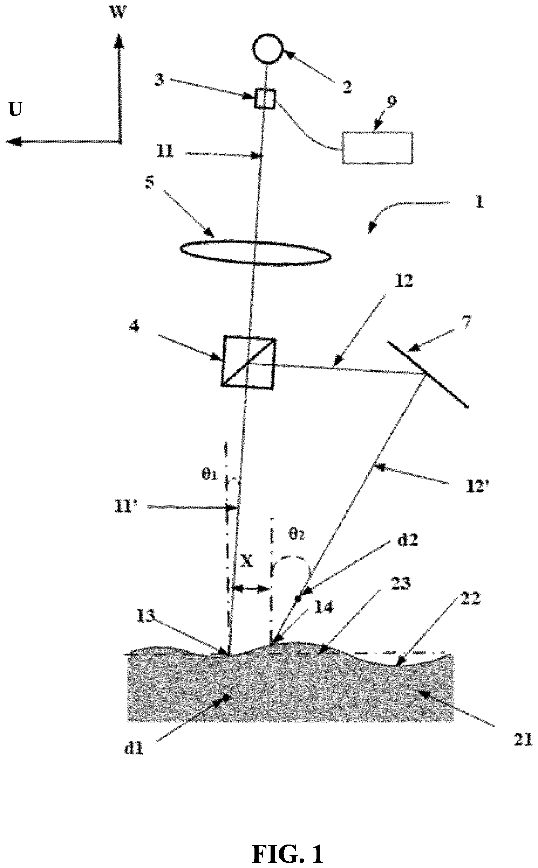

La Fig 1 présente un premier système de génération 1 de signal représentatif du profil de la surface externe 22 du milieu 21 dans le cadre de son utilisation en présence de la surface. La surface externe 22 définit un plan médian 23 pour lesquels, les points de la surface sont statiquement équitablement répartis de part et d'autre du plan médian 23. Ce plan médian 23 définit une direction normale qui se caractérise sur la figure par une ligne droite alternée de pointillés et de traits située verticalement selon la direction W. La figure montre une vue en coupe de la surface externe 22 dans un plan défini par la direction U de mouvement du milieu 21 par rapport au dispositif statique sur lequel est installé le système de génération 1. Les chemins optiques 11' et 12' dessinent sur la surface externe 22 une ligne de lecture suivant la direction U.

Dans cette Fig 1, le système de génération 1 correspond à un système de génération de l'invention selon un premier mode de réalisation dans lequel une seule source de lumière est employée. Une source laser 2 émet un premier faisceau gaussien de lumière cohérente monochromatique à une longueur d'onde λ suivant un premier parcours optique 11 déterminé par le trait continu issu de la source 2. Ce premier faisceau de lumière traverse en sens aller un capteur de lumière 3 avant de rencontrer une première lentille de focalisation 5 dont la distance focale est f1. A la sortie de la première lentille de focalisation 5, la lumière est focalisée à une distance de focalisation f1 suivant n'importe quel chemin optique.

Le premier chemin optique 11' issus du premier faisceau de lumière ayant traversé la première lentille de focalisation 5 est ensuite divisé en 2 au travers d'un cube séparateur 4 par exemple 50/50. Ainsi, la puissance lumineuse est séparée en deux parties égales et chaque demie puissance est dirigée suivant deux directions différentes. Le cube séparateur 4 est le moyen de génération d'un second faisceau de lumière issu du premier faisceau de lumière suivant un second parcours optique 12 qui est identique au second chemin optique 12'. Par conséquent elle garde ses caractéristiques du premier faisceau de lumière. Ainsi le second faisceau de lumière est gaussien, cohérent et monochromatique à la même longueur d'onde que le premier faisceau de lumière. De plus, il est généré depuis un faisceau de lumière focalisé, ainsi le second chemin optique 12' est créé. Le miroir 7 joue ici le rôle de moyen de cheminement suivant le second chemin optique 12'. Il a pour premier rôle de diriger le second faisceau de lumière vers la surface externe 22 suivant un angle d'incidence dont la projection angulaire par rapport à la normale au plan médian 23 dans le plan défini par la normale au plan médian 23 et la direction U vaut θ2 qui est préférentiellement inférieure à 45 degrés tout en étant obligatoirement non nulle. Le second rôle du miroir 7 est de définir la position du point géométrique d2 de sorte que ce point soit différent du point géométrique d1 où se focalise le premier chemin optique 11'. De ce fait, le point géométrique d2 correspondant à la distance de focalisation f2 du second faisceau de lumière se trouve au-dessus du plan médian 23 de la surface externe 22 du milieu 21. Ce second faisceau de lumière vient impacter la surface externe 22 au point d'impact 14 sous un angle d'incidence dont la projection, dans le plan, vaut $\theta_2$. Les angles d'incidence $\theta_1$ et $\theta_{2t}$ sont supérieurs à un degré. Ainsi, sous cette incidence, le faisceau rétrodiffusé est soumis à l'effet Doppler provoqué par la vitesse de déplacement V entre le dispositif comprenant le système de génération 1 et le milieu 21 suivant la direction U.

L'autre demi-puissance restante suit le premier chemin optique 11' et vient impacter la surface externe 22 au point d'impact 13 sous un angle d'incidence dont la projection par rapport à la normale au plan médian 23 dans le plan défini auparavant vaut θ1 qui est supérieur à 1 degré. Pour cette partie du premier faisceau de lumière, la distance de focalisation f1 et le premier chemin optique 11' définit un premier point géométrique d1 situé en dessous du plan médian 23 de la surface externe 22. Ici, les deux points d'impact 13 et 14 correspondants respectivement à la rencontre du premier chemin optique 11' et respectivement du second chemin optique 12', avec la surface externe 22 sont écartés d'une distance X suivant la direction U.

Une partie des premiers et second faisceaux de lumière incidents sont rétrodiffusées par la surface externe 22 au niveau de chacun des points d'impact 13 et 14. Une partie de cette lumière rétrodiffusée suit le cheminement inverse du parcours optique incident. En particulier, les deux faisceaux de lumière se réunissent après le cube séparateur 4 pour poursuivre conjointement leur route vers la source de lumière 2 et passant obligatoirement par le capteur de lumière 3. La rencontre du premier faisceau incident et du faisceau rétrodiffusé engendre des interférences électromagnétiques tant que ces deux faisceaux sont cohérents entre eux.

Ce système de génération 1 selon le premier mode de réalisation, employant une seule source de lumière 2, mais aussi équipé d'un seul capteur de lumière 3 ne délivre qu'un seul signal électrique en sortie du capteur de lumière 3 qu'il dirige vers le dispositif électronique comprenant l'amplificateur de signaux 9. Le capteur de lumière 3 doit être capable de traduire les interférences électromagnétiques qui ont lieu au niveau de ce capteur de lumière 3 en un signal électrique. Peu importe la localisation du capteur de lumière 3 sur le premier parcours optique mais il est préférable de le positionner où la somme des deux faisceaux de lumière génère une taille de faisceau le plus petit pour optimiser les interférences.

Afin de dissocier sur l'unique signal électrique du capteur de lumière 3 les informations issues de l'interférence du premier et du second faisceaux de lumière, il est préférable que l'information soit facilement détectable. Or, l'information utile est ici portée en particulier par le fondamental de la fréquence Doppler et ses harmoniques. La fréquence Doppler est dictée en théorie par trois paramètres. Le premier correspond à la vitesse V relative selon la direction U entre le milieu 21 et le dispositif sur lequel le système de génération 1 est monté. Le second est l'angle d'incidence θ entre le faisceau de lumière et la normale à la surface externe 22 que l'on prendra comme étant celle du plan médian 23. Le troisième est la longueur d'onde λ de la lumière cohérente. Ici, seul l'angle d'incidence θ du faisceau de lumière peut générer un paramètre efficace pour dissocier les deux fréquences Doppler. En effet, les deux autres paramètres sont potentiellement identiques par construction de ce système de génération 1. De ce fait, les premier et second angles d'incidence par rapport à la normale au plan médian 23, ici on parle de leur projection dans le plan défini plus haut, sont différents, ce qui permet de dissocier les fréquences Doppler l'une de l'autre. Cette différence doit être d'au moins 3 degrés pour dissocier les signaux de chaque faisceau de lumière.

Enfin, afin que les signaux issus de chaque faisceau de lumière puissent être exploités pour déterminer la distance d de la surface externe 22, et de ce fait permettre la reconstruction du profil de la surface externe 22 selon la ligne de lecture, il convient d'écarter les deux points géométriques d1 et d2 d'une longueur supérieure à la plus grande longueur de Rayleigh des deux faisceaux gaussiens de lumière. En effet, la propagation gaussienne de la lumière assure que la quantité de lumière rétrodiffusée est proportionnelle à la distance entre le point de focalisation du faisceau de lumière et la surface externe 22 où la rétrodiffusion a lieu. En fait, l'énergie sera maximale si, la surface externe 22 se situe au point de focalisation. Plus on s'en éloigne, plus l'énergie lumineuse rétrodiffusée diminue suivant une courbe gaussienne ce qui apporte une dynamique mesurable sur les interférences électromagnétiques. En assurant un éloignement suffisant entre les deux points de focalisation, on assure qu'une combinaison des interférences électromagnétiques mesurées sur chaque voie permet de déduire la distance d de la surface externe 22.

On peut observer les interférences électromagnétiques au travers du phénomène de self mixing ou phénomène de rétroinjection optique, en employant une source laser comme source de lumière 2, équipée par exemple d'une photodiode comme capteur de lumière 3 L'enregistrement temporel du signal de sortie de la photodiode est alors une image des interférences de la lumière entre le faisceau incident et le faisceau rétrodiffusé par la surface externe. Les variations temporelles en amplitude sont dues à la fois à la distance entre le point de focalisation d et la surface externe 22, la réflectivité de la surface externe 22. L'information est en partie portée par la fréquence Doppler liée à la vitesse relative V entre le milieu 21 et le système de génération 1. En assurant deux voies de mesure correspondant chacune à un faisceau de lumière pointant sur la même ligne de lecture de la surface externe 22 dont le point de focalisation est différent, les deux voies de mesures sont chacune le résultat de la réflectivité de la surface externe 22 et de la distance entre le point de focalisation et la surface externe 22. La combinaison des deux voies permet de rendre insensible le résultat des deux voies à la réflectivité de la surface externe 22 et de n'être dépendant que de la distance des deux points de focalisations ou géométriques par rapport à la surface externe 22.

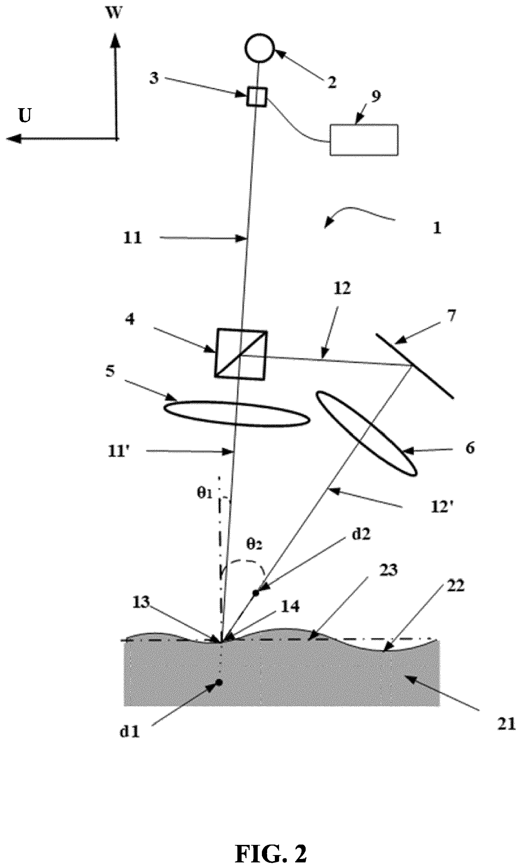

La Fig. 2 est une illustration d'un autre exemple d'un système de génération 1 selon le premier mode de réalisation, c'est l'exemple préféré de ce mode de réalisation. Le système 1 est ici présenté dans le cadre de son utilisation avec une surface externe 22 d'un milieu 21 présentant un plan médian 23. Cette fois-ci, le premier faisceau de lumière issu de la première source de lumière 2 est focalisé à l'aide d'une lentille de localisation 5 située en aval du premier dispositif optique 4. Une nouvelle fois, ce dispositif optique 4 joue aussi le rôle d'un moyen de génération d'un second faisceau de lumière gaussien, cohérent et monochromatique. Ce second faisceau de lumière est dû à la séparation de la puissance lumineuse du premier faisceau gaussien au travers du cube séparateur 4. Celui délivre une première partie du premier faisceau de lumière vers la surface externe 22 du milieu 21 sous une incidence de sorte que la projection θ1 de l'angle d'incidence par rapport à la normale suivant le plan médian 23 de la surface externe 22 soit supérieure à un degré. Préalablement au point d'impact 13 sur la surface externe 22, le faisceau de lumière est focalisé par la lentille de focalisation 5 à une distance focale f1 de sorte que le point géométrique d1 qui est le point de focalisation f1 suivant le premier chemin optique 11 soit un point virtuel situé dans le milieu 21 Ainsi, sous cette incidence, une partie du faisceau de lumière subit l'effet Doppler, le faisceau rétrodiffusé porte alors une information de type Doppler qui sera exploitée pour déterminer la distance d de la surface externe.

De même le second faisceau de lumière qui est l'autre partie du premier faisceau de lumière suit un second parcours optique vers la surface externe 22 du milieu 21. Ici, le moyen de cheminement de ce second faisceau de lumière comprend un miroir 7 qui redirige le second faisceau de lumière vers la surface externe 22. Sur le second parcours optique se trouve une seconde lentille de focalisation 6 dont la focale f2 focalise le second faisceau de lumière au point géométrique d2 situé au-dessus du plan médian 23. Le point d'impact 14 du second faisceau de lumière suivant le second chemin optique est identique au premier point d'impact 13 d'une partie du premier faisceau de lumière. Seule la projection θ2 de l'angle d'incidence du second faisceau de lumière sur le surface externe 22 par rapport à la normale au plan médian 23 diffère de la projection θ1.

Dans cette figure 2, le système de génération 1 comprend un unique et seul capteur de lumière 3 situé sur le premier parcours optique du premier faisceau de lumière. Celui-ci est connecté à un amplificateur de signaux 9 pour rendre exploitable le signal électrique délivré par le capteur 3. Le capteur 3 enregistre les interférences électromagnétiques du premier et second faisceau de lumière. Ceux-ci portent l'information sur les fréquences Doppler de chaque faisceau de lumière. Ces fréquences dépendantes de la longueur d'onde de la lumière monochromatique, de la vitesse de déplacement V et de l'angle d'incidence suivant la direction U. En raison des écarts sur l'angle d'incidence, les informations portés par chacun des faisceaux de lumière sont facilement dissociables. En effet, le rapport des angles de projections est d'environ 1, 5. De plus les angles d'incidences sont tous les deux contenus dans un cône dont l'axe de révolution est porté par la normale au plan médian 23, dont l'angle d'ouverture est inférieur à 30 degrés et dont le sommet se situe sur le plan médian 23 de la surface externe 22.

Afin que le faisceau rétrodiffusé issu du second chemin optique perturbe à minima les interférences électromagnétiques entre le premier faisceau de lumière et son faisceau rétrodiffusé au niveau du premier capteur de lumière 3, il est préférable que les deux faisceaux de lumière en aval de leur lentille de focalisation, c'est-à-dire au niveau de leur chemin optique ne se croisent pas avant la surface externe. C'est une précaution à prendre pour tout système de génération 1 du premier mode de réalisation qui ont une seule source de lumière 2.

Ici, les deux points d'impact 13 et 14 des premier 11 et second 12 chemins optiques sont confondus. Ceci évite toute correction temporelle entre les deux signaux couplés au niveau du capteur de lumière 3. Ainsi, les deux signaux seront directement exploitables pour en déduire la distance d de la surface externe 22 du milieu 21, ce qui permet un traitement en temps réel plus rapide. De plus, l'utilisation d'un seul capteur ne nécessite pas une synchronisation des signaux limitant aussi les petites erreurs, ce qui réduit le bruit sur les signaux.

C'est le montage préférentiel du premier mode de réalisation en raison de l'absence de ces corrections temporelles sur les signaux qui accélère le traitement des signaux et limitent le bruit sur les signaux. De plus, c'est un montage peu coûteux puisque l'on utilise une seule source de lumière et un seul capteur.

Bien entendu, ces exemples sont des applications concrètes de l'invention qui ne saurait se limiter à ces exemples. En particulier toute combinaison des caractéristiques de ces exemples est envisageable et entre dans le cadre général de l'invention. La portée de l'invention est définie par les revendications.

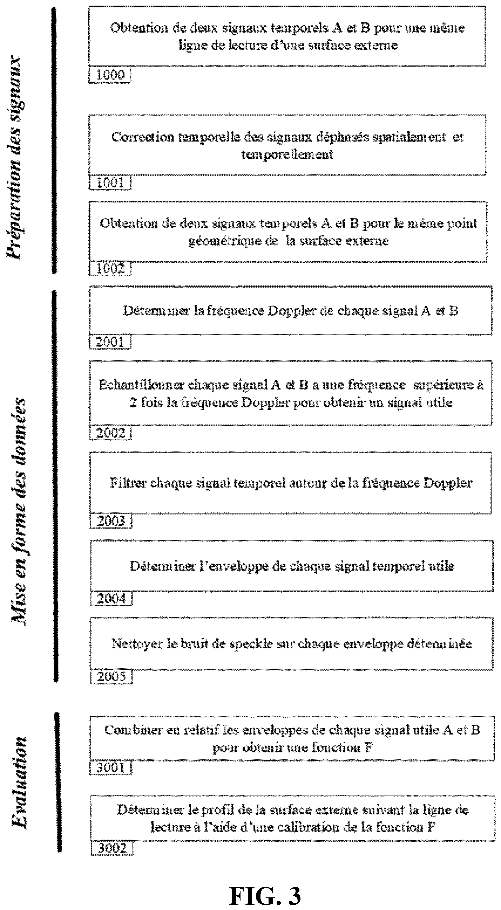

La Fig. 3 est un synoptique du procédé d'évaluation de la distance d de la surface externe par rapport à une référence mettant potentiellement en oeuvre le système de génération d'au moins un signal représentatif du profil d'une surface externe d'un milieu animé d'une vitesse relative V par rapport au système de génération suivant une direction U. Mais, ce procédé ne saurait pour autant se limiter à des signaux sortis de ce système de génération.

La Fig. 3 comprend trois phases principales. La première concerne la préparation des signaux électriques, par exemple en sortie du système de génération d'un signal représentatif du profil de la surface externe du milieu. La seconde phase concerne la mise en oeuvre de ces signaux afin d'effectuer la troisième phase qui est l'évaluation à proprement dite de la distance d de la surface externe. Bien entendu cette première phase est plus ou moins complexe si un système de mesure génère directement deux signaux représentatifs du profil de la surface externe par rapport à des références connues pour le même point géométrique de ligne de lecture de la surface externe. Ce système est par exemple l'exemple préféré du premier mode de réalisation de la figure 2.

La première phase comprend une première étape 100 consistant à l'obtention de deux signaux temporels A et B représentatif du profil de la surface externe par rapport à une ligne de lecture. Ceux-ci peuvent par exemple être la sortie du dispositif électronique du système de génération suivant l'invention. Bien entendu, à cette étape il n'est pas certain que les deux signaux soient phasés temporellement et spatialement ce qui nécessite de passer par l'étape suivante 1001. Par exemple, ces deux points sont séparés suivant la ligne de lecture de la surface externe d'un espacement X comme dans l'exemple de la figure 1.

La seconde étape 1001 correspond la correction spatio-temporelle à appliquer à l'un et/ou l'autre des signaux temporelles A et B de l'étape 1000. Pour cela, il convient de connaître le procédé d'obtention des deux signaux temporels, c'est-dire l'espacement spatio-temporel entre les deux points de mesure correspondant chacun à un signal temporel par rapport à une référence commune. La position spatiale peut être une position métrique obtenu visuellement par exemple. Le décalage temporel peut être la date de passage devant un point repère servant par exemple de référence commune au travers d'un signal d'horloge avec une métrique pour chaque signal. De plus, il est utile de connaître la vitesse de défilement suivant la ligne de lecture de la surface externe associée à chaque signal temporel. L'ensemble de ces données permet de définir une matrice de corrections pour recaler spatio-temporellement les deux signaux sur un même point géométrique de la ligne de lecture. L'application de cette correction aux signaux temporels de l'étape 1000 donne le résultat de l'étape 1002 qui clôt la phase de préparation des signaux.

La seconde phase correspond à une mise en forme des données de mesure, représentées par les signaux temporels obtenus à l'étape 1002 de la première phase. Le principe du procédé suivant l'invention est que l'information utile des signaux temporels est contenue par le fondamental et les harmoniques de la fréquence Doppler associée à la vitesse relative V du milieu 21 par rapport au système de mesure des signaux temporels.

Ceci est indépendant du moyen physique de mesure des signaux, que cela soit la lumière, le son ou tout autre onde électromagnétique.

La première étape 2001 consiste à définir la fréquence Doppler associée à la vitesse relative V. La détermination de la fréquence Doppler peut être faite au travers d'une formule mathématique comme, dans le cas de signaux de lumière la formule liant la vitesse relative V, l'angle d'incidence par rapport à la normale à la surface externe et la longueur d'onde de la lumière. Elle peut aussi résulter d'une analyse des signaux, que cette analyse soit temporelle ou fréquentielle. Connaissant cette fréquence Doppler, il est nécessaire que la fréquence d'échantillonnage des signaux temporels soit au moins deux fois supérieure à la fréquence Doppler, respect de la condition du Théorème de Shannon, afin de s'assurer que l'information des signaux temporels est vraisemblable et non induite d'incertitude liée aux conditions de mesure, ce qui correspond à l'étape 2002. Optionnellement, il peut s'avérer utile de filtrer les signaux temporels autour de la fréquence Doppler identifiée selon l'étape 2001 et ceci peut être fait par exemple sur une bande large comprise entre 0,7 et 1,3 fois la fréquence Doppler. Ainsi, selon le mode d'identification de la fréquence Doppler, théoriquement ou par analyse fréquentielle des signaux ou par analyse temporelle des signaux, ainsi que l'évolution lente potentielle de la vitesse relative V, la fréquence Doppler n'est pas forcément déterminée de manière absolue, une fenêtre large permet alors de couvrir toutes ces incertitudes en isolant l'information exploitable, ce qui correspond à l'étape 2003. Bien entendu, si les perturbations fréquentielles liées au système de mesure des signaux sont faibles, il est tout à fait envisageable de prendre le signal complet sans filtrage sélectif et passer directement à l'étape 2004.

L'étape 2004 consiste à se focaliser sur le signal général portant l'information au travers de l'enveloppe du signal utile. On s'attend à ce que celui-ci soit une image des évènements liés à la fréquence Doppler associée à la vitesse relative V. On détermine à l'étape 2004, l'enveloppe du signal temporel utile pilotée potentiellement par une bande étroite de fréquence autour de la fréquence Doppler. Bien entendu l'enveloppe du signal utile peut être construite à partir des minimas, des maximas ou de la valeur absolue du signal utile. Le choix de la méthode dépend de la nature des signaux de mesure par rapport à la grandeur physique observée.

Optionnellement, afin de statiquement éliminer les bruits parasites sur l'enveloppe du signal temporel de mesure, on effectue un nettoyage de type speckles, c'est-à-dire de type tavelure, pour en extraire l'information précise au cours de l'étape 2005. Ceux-ci permettent d'éliminer statistiquement les aléas de mesure dus au non-respect de conditions d'une mesure idéale. Cela se fait au travers d'une campagne d'apprentissage sur une cible connue représentative de la surface externe du milieu que l'on désire observer à l'aide du système de mesure envisagé. Cette phase d'apprentissage détermine une distribution gaussienne des aléas de mesure qu'il convient de coupler à un bruit équitablement réparti pour déterminer un bruit de speckle, ou bruit de tavelure. Cela permet de déterminer le fenêtrage temporel du signal utile qu'il faut prendre en compte pour nettoyer le bruit de speckles, ou bruit de tavelure, en application de la distribution gaussienne identifiée. L'étape 2005 consiste à retirer du signal d'enveloppes le bruit de speckle, ou bruit de tavelure, déterminé pour obtenir une enveloppe nettoyée sur chaque voie de mesure. Cette étape clôt la seconde phase de mise en forme des données.

La dernière phase est l'évaluation de la variation de la distance d de la surface externe par rapport à une référence permettant de déduire le profil de la surface externe. Celle-ci comprend une première étape 3001 qui consiste à combiner mathématiquement les enveloppes obtenues aux étapes 2004 ou 2005 de façon à définir une fonction F qui soit bijective. La bijectivité de la fonction F permet de garantir l'unicité de la distance d de la surface externe à l'aide des informations des deux enveloppes. Dans le cas de self mixing, ou rétroinjection optique, avec des faisceaux de lumière gaussiens et cohérents, une définition de la fonction F comme étant la différence des enveloppes exprimées en échelle logarithmique assure à la fois la monotonie et une bonne sensibilité de la fonction F sur la gamme de distance séparant les deux points géométriques d1 et d2 du système de génération présenté dans l'invention de dispositif. La précision est renforcée en prenant la valeur absolue du signal utile pour construire les enveloppes. Bien entendu, la précision s'améliore en prenant les enveloppes nettoyées.

Enfin pour remonter à une distance d en relatif entre divers points de la ligne de lecture de la surface externe par rapport à une position géométrique de référence, il faut établir une calibration entre le résultat de la fonction F telle que définie à l'étape 3001 et une cible dont la position est connue par rapport aux points géométriques du système de mesure, ce qui correspond à l'étape 3002. Cela permet de convertir la réponse de la fonction F en une grandeur métrique connue.

A cet effet, une étape de calibration doit être entreprise à partir du dispositif de mesure délivrant directement ou indirectement les signaux temporels par rapport à deux points géométriques différents. Dans le cas du système de génération de l'invention de dispositif, les deux points géométriques sont les points d1 et d2 où sont focalisés chacun des faisceaux de lumière et situés de part et d'autre du plan médian de la surface externe du milieu. Ici, la calibration s'effectue à l'aide d'une cible dont la réponse physique est au moins aussi forte de la surface externe du milieu que l'on souhaite observer. Dans le cas du système de génération de l'invention de dispositif, il faut employer une cible blanche, c'est-à-dire de très forte réflectivité par rapport au milieu d'observation. Ainsi, la majorité de la lumière incidente est rétrodiffusée par la surface qui en absorbe une très faible proportion. De plus, afin d'observer une diffusion de la lumière, il faut que la cible soit rugueuse. Cependant, afin de ne pas être pénalisé par une forte intégration entre la lumière du système de génération et la cible, il convient que la rugosité de surface de la cible soit supérieure à celle du milieu observé. Ensuite, il suffit d'effectuer une calibration du système de génération en déplaçant la cible entre les points géométriques d1 et d2 de manière connue et d'identifier à l'aide des enveloppes la valeur de la fonction F correspondante. Cette calibration sera employée à l'étape 3002 pour obtenir la distance d de la surface externe du système. Ici, la fonction F est insensible à la puissance rétrodiffusée puisque la fonction F est une combinaison relative des enveloppes des signaux, comme le rapport en échelle linéaire ou la différence en échelle logarithmique. Dans le cas où la combinaison des enveloppes est en absolu, il conviendra de faire une calibration plus précise à l'aide d'une cible dont les propriétés physiques sont semblables à celles du milieu que l'on souhaite observer à l'aide du dispositif de mesure selon la métrique employée : la lumière, le son ou les ondes électromagnétiques.

La correction optionnelle du bruit de speckles, ou bruit de tavelure, s'effectue aussi en employant la même cible que l'étape de calibration des signaux. Cette fois-ci, on multiplie les mesures temporelles en déplaçant la cible connaissant le résultat à atteindre pour évaluer la distribution des mesures autour de la valeur de référence. Pour cela, on évalue dans le domaine fréquentiel, la distribution des mesures selon des conditions de mesures diversifiées sur un large échantillon de temps. On modélise cette distribution fréquentielle par une gaussienne centrée. La largeur de cette gaussienne conditionne la taille minimale de la fenêtre temporelle de mesure pour que statistiquement la distribution gaussienne soit représentative. On évalue alors le bruit de speckles, ou bruit de tavelure, par le produit de la distribution fréquentielle gaussienne par un bruit uniformément réparti entre 0 et 1. Ce bruit de speckles, ou bruit de tavelure, est à retrancher de l'enveloppe déterminée pour obtenir une mesure qui ne dépend à l'ordre un que de la réflectivité de la cible ou de la surface externe du milieu observé. On suppose une proportionnalité entre la réflectivité de la cible et celle de la surface externe du milieu à observer qui sera transparent par la combinaison relative des enveloppes.

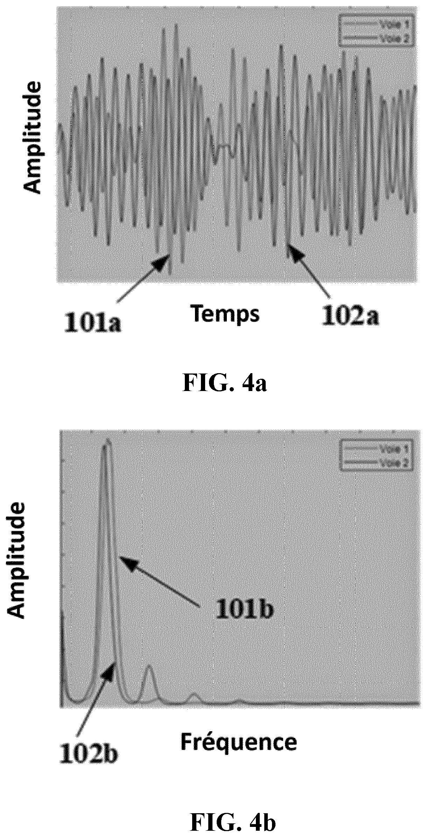

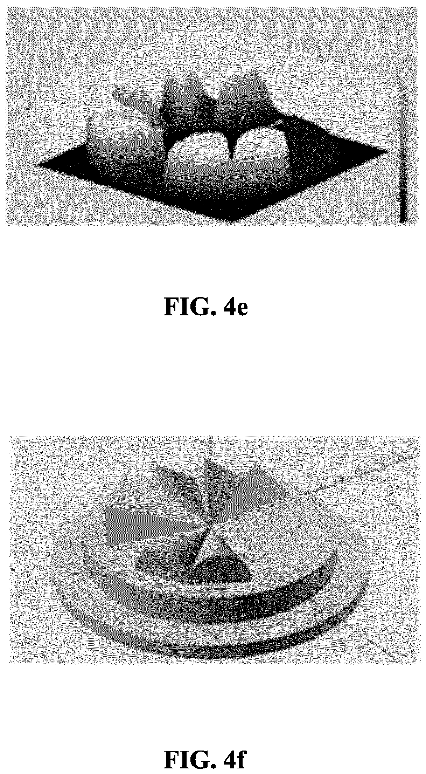

Les figures 4a à 4e illustrent la méthode de mesure du profil d'une surface externe d'une éprouvette dont la figure 4f représente la reconstruction tridimensionnelle obtenue par des moyens photographiques à l'aide d'un éclairage spécifique. Cette éprouvette circulaire présente un profil, selon la direction de son axe, évolutif en fonction de l'azimut de façon non monotone. Et, une évolution proportionnelle de ce profil est définie selon le rayon depuis le centre de l'éprouvette circulaire. Celle-ci est montée sur un arbre de rotation tournant à une vitesse angulaire de l'ordre de 1550 tr/mn. Enfin, l'arbre de rotation est animé d'un mouvement de translation suivant une direction X permettant de déplacer en translation le centre de l'éprouvette circulaire. La rugosité de surface de l'éprouvette est de l'ordre millimétrique en ce qui concerne les massifs recouvrant 75 pourcents de l'éprouvette. Sur le dernier quart de l'éprouvette, s'apparentant à une surface lisse dont la rugosité de surface de l'ordre de la dizaine de micromètres.

Pour appliquer la méthode, un système de génération préféré a été employé dont le principe est illustré en figure 2. L'angle d'incidence des premier et second faisceaux de lumière sur la surface externe de l'éprouvette est identique tout en étant contenu dans un cône d'angle d'ouverture inférieur à 30 degrés de sorte que la projection de ces angles d'incidence par rapport à la normale au plan médian de la surface externe dans un plan défini par cette normale et la direction U de déplacement de l'éprouvette soit d'environ 5 degrés. De plus, on assure que les deux faisceaux de lumière aient le même point d'impact sur la surface externe ce qui limite les corrections à effectuer sur les signaux interférométriques des deux chemins optiques. En fait, la ligne de lecture sur la surface externe de l'éprouvette est une succession de cercles centrés sur le centre du disque circulaire de l'éprouvette, chaque cercle correspondant à une position de translation différente de l'arbre de rotation sur lequel est montée l'éprouvette.

Le système de génération comprend, en tant que source de lumière, une diode laser équipée d'une photodiode à l'entrée de la cavité amplificatrice de la diode laser. La diode laser émet un faisceau de lumière cohérent, monochromatique à la longueur d'onde unique et dont la propagation suivant la direction du faisceau est de type gaussien. Ici la longueur d'onde de la première diode laser est centrée sur 1350 nanomètres. Tandis que la seconde est centrée sur 1500 nanomètres. La photodiode associée à chaque diode laser enregistre les interférences électromagnétiques entre le faisceau de lumière incident et le faisceau de lumière rétrodiffusé par la surface externe de l'éprouvette. Les interférences électromagnétiques du premier chemin optique sont majoritairement portées par les harmoniques de la première fréquence Doppler liée directement la première longueur d'onde, inversement proportionnelle à la longueur d'onde. De l'autre côté, les interférences électromagnétiques du second chemin optique sont portées par les harmoniques de la seconde fréquence Doppler dont la fréquence Doppler est inférieure à la première fréquence Doppler. La différenciation des points géométriques d1 et d2 où sont collimatés les premier et second chemins optiques , est déterminés par la longueur des chemins optiques. Ici, le premier chemin optique vers la surface externe est défini par la première lentille de focalisation au travers de sa position sur le premier parcours optique et sa distance focale. Le second parcours optique comprend un élément optique séparateur pour rediriger le second faisceau de lumière vers la surface externe de l'éprouvette. Le point géométrique d2 est directement piloté par le positionnement et la distance focale de la seconde lentille de focalisation du système de génération. Ainsi, on obtient en sortie du dispositif électronique un signal électrique associé à une photodiode contenant l'information utile portée par les harmoniques de chaque fréquences Doppler différentes.

La mesure s'effectue en fixant le système de génération sur un dispositif statique situé au droit de l'éprouvette de telle sorte que les points géométriques d1 et d2 soient situées de part et d'autre de la surface externe de l'éprouvette. Dans notre cas, ils sont à égale distance du plan médian de la surface externe de l'éprouvette à une distance d'environ 5 millimètres. Ainsi l'écartement des points géométriques est de l'ordre du centimètre, ce qui est inférieur aux variations du profil de la surface externe de l'éprouvette tout en étant supérieur à la longueur de Rayleigh des premier et second faisceaux de lumière gaussiens.

La figure 4a montre l'évolution temporelle en amplitude de deux signaux. Le premier signal 101a est associée au premier parcours optique et le second signal 102a est associée au second parcours optique. Ici, les interférences observées traduisent des modulations d'amplitude du signal temporel autour d'une porteuse. La succession des fronts est directement liée aux interférences qui évoluent avec la position des points d'impact des faisceaux de lumière sur la surface externe de la surface.

La figure 4b est le spectre fréquentiel des signaux temporels de la figure 4a pour chacun des signaux. Le premier spectre de réponse 101b se caractérise principalement par un massif centré sur la première fréquence Doppler. La seconde courbe 102b se caractérise par une succession d'harmoniques associées à la seconde fréquence Doppler. Les deux fréquences Doppler sont légèrement décalées en fréquence. Quelle que soit la réponse spectrale des signaux, la fréquence fondamentale porte la majorité de l'énergie du signal. De plus, on note une émergence sur chaque signal à très basse fréquence qui s'apparente à un mode structurel du dispositif ou du système de génération employé. En effet, cette émergence apparait sur les deux spectres. Par conséquent, la réponse temporelle est entachée de la signature du dispositif statique ou du système de génération qu'il convient d'éliminer.

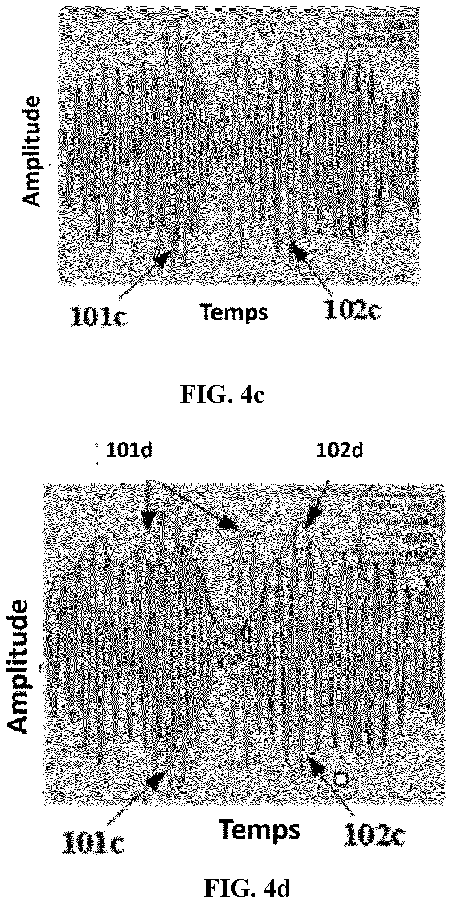

La figure 4c montre des signaux temporels 101c et 102c qui correspondent aux signaux 101a et 102a respectivement en filtrant ses signaux sur une bande de fréquence étroite autour de la fréquence fondamentale Doppler de chaque signal. Ces signaux temporels corrigés éliminent la contribution vibratoire du mode structurel du dispositif ou du système de génération. La bande de fréquence est comprise entre 0,7 et 1,3 fois la fréquence Doppler. La signature spectrale de chaque signal temporel avec des harmoniques de la fréquence Doppler peu sollicitées autorise une telle correction sans provoquer une perte d'information sur les interférences électromagnétiques observées par la photodiode. Dans le cas où l'information est aussi portée par les harmoniques, il convient de prendre en compte les harmoniques par l'intermédiaire de l'étape de filtrage.

La figure 4d montre la définition des enveloppes 101d et 102d à partir des signaux temporels filtrés 101c et 102c. Ici, les enveloppes 101d et 102d sont construites sur les maximas des signaux temporels 101c et 102c.

Enfin, on reconstruit un profil de surface illustré à la figure 4e en combinant les enveloppes 101d et 102d obtenues précédemment. Les signaux temporels étant obtenus en phase lors de l'acquisition, aucune étape de correction spatiotemporelle n'est à effectuer sur les signaux temporels. Ici, la construction du profil se fait à chaque échantillon temporel, en faisant la différence des logarithmes des amplitudes des enveloppes 101d sur 102d. En raison de l'écartement des points géométriques et de la formation des waists du laser ; on entend par le terme anglais « waist » la largeur du faisceau laser au point de focalisation, aux points géométriques, une bijectivité de la combinaison précitée permet d'associer une unique distance D à chaque combinaison. La distance D est mesurée par rapport à n'importe quel point référence réel ou fictif du dispositif de mesure. Ici, pour le profil, seule la position relative d'un échantillon par rapport à un autre est intéressante, quel que soit le point de référence. La distance D est obtenue à partir d'une phase de calibration du dispositif de mesure employant une cible circulaire blanche dont la rugosité de surface est supérieure aux longueurs d'onde des premier et second faisceaux de lumière. La surface de type cylindrique présente une surface externe cylindrique dont le profil est évolutif avec le rayon du cylindre et invariant avec l'azimut du cylindre. La combinaison relative des enveloppes obtenues par le procédé correspondant à la fonction F bijective est alors comparée à l'altitude du profil de la cible.

La figure 4f est la reconstruction tridimensionnelle de l'éprouvette après post traitements des images obtenues par plusieurs caméras en statique et fonction d'un éclairage spécifique. Cette reconstruction est à comparer à l'image de la figure 4e. On note une vraisemblance des profils entre la mesure obtenue par le procédé et la reconstruction statique au niveau global et local. En effet les imperfections locales sont observables à l'ordre deux qui correspond à l'espacement entre deux cercles de mesure de l'éprouvette. Un simple lisage des points permet de s'affranchir de ce problème.

## Revendications

1. Système de génération (1) d'au moins un signal représentatif du profil d'une surface externe (22) d'un milieu (21) présentant un plan médian (23) et ayant à une vitesse relative V par rapport au système suivant une direction U comprenant :

   - Une première source de lumière (2) apte à émettre un premier faisceau gaussien de lumière cohérente et monochromatique dont la lon-

gueur d'onde $\lambda_1$ est adaptée aux caractéristiques d'absorption optique du milieu (21) suivant un premier parcours optique (11) ;

- Un premier capteur (3) apte à évaluer les effets des interférences électromagnétiques entre une partie du premier faisceau de lumière émis et une partie du faisceau rétro diffusé sur la surface externe (22) du milieu (21) du premier faisceau de lumière, et délivrant un signal électrique,

- Au moins un élément optique séparateur (4) situé en amont du premier capteur (3) redirigeant une partie du premier faisceau de lumière situé sur le premier parcours optique (11), l'autre partie du premier faisceau de lumière est un second faisceau de lumière suivant un second parcours optique (12)

- Au moins une lentille de focalisation (5,6) située en amont ou en aval du au moins un élément optique séparateur (4) sur le premier et /ou le deuxième parcours optique (11, 12) permettant de focaliser tout ou partie du faisceau de lumière à une distance de focalisation f et définissant un chemin optique (11', 12') en amont, et

- Un moyen de cheminement (7) du au moins un second faisceau de lumière comprenant au moins un miroir apte à rediriger au moins une partie du second chemin optique en direction du premier chemin optique de sorte que la longueur du premier chemin optique (11') soit différente de la longueur du second chemin optique (12'),

dans lequel

les deux chemins optique (11', 12') sont coplanaires, la combinaison de la distance de focalisation (f1, f2) et du chemin optique (11', 12') pour chaque faisceau de lumière définissent deux points géométriques distincts d1 et d2 correspondant aux points de focalisation de chaque faisceau de lumière, la distance entre les points géométriques d1 et d2 est supérieure à la plus grande longueur de Rayleigh des premier et second faisceaux gaussiens de lumière **et** les vecteurs directeurs des premier et second chemin optique (11', 12') définissent un angle θ supérieur ou égal à 3 degrés, le système étant apte à être agencé de sorte que :

i. Chaque vecteur directeur de chemin optique (11', 12') forme un angle d'au moins 1 degré par rapport à la normale à la surface externe (22) du milieu (21) suivant la direction U, et
ii. Les deux positions géométriques d1 et d2 encadrent le plan médian (23) de la surface externe (22) du milieu (21).

2. Système de génération (1) d'au moins un signal représentatif du profil d'une surface externe (22) d'un milieu (21) selon la revendication 1 dans lequel la lentille de focalisation (5) est située en amont de l'élément optique séparateur (4).

3. Système de génération (1) d'au moins un signal représentatif du profil d'une surface externe (22) d'un milieu (21) selon la revendication 1 dans lequel, la première lentille de focalisation (5) est située en aval de l'élément optique séparateur (4) sur le premier parcours optique (11) et une seconde lentille de focalisation (6) est située en aval de l'élément optique séparateur (4) sur le second chemin optique (12).

4. Système de génération (1) d'au moins un signal représentatif du profil d'une surface externe (22) d'un milieu (21) selon l'un des revendications 1 à 3 dans lequel, le système de génération (1) comprend un dispositif électronique (9) à la sortie du signal électrique du premier capteur (3) comprenant un circuit amplificateur électronique.

5. Système de génération (1) d'au moins un signal représentatif du profil d'une surface externe (22) d'un milieu (21) selon l'une des revendications précédentes dans lequel le premier capteur (3) est compris dans le groupe comprenant un phototransistor, une photodiode, un ampèremètre et un voltmètre.

6. Système de génération (1) d'au moins un signal représentatif du profil d'une surface externe (22) d'un milieu (21) selon l'une des revendications précédentes dans lequel la longueur d'onde du premier faisceau de lumière est comprise entre 200 et 2000 nanomètres, préférentiellement entre 400 et 1600 nanomètres.

7. Système de génération (1) d'au moins un signal représentatif du profil d'une surface externe (22) d'un milieu (21) selon l'une des revendications précédentes dans lequel la première source de lumière est une diode laser.

8. Dispositif statique ou mobile équipé d'un système de génération (1) d'au moins un signal représentatif du profil d'une surface externe (22) d'un milieu (21) selon l'une des revendications 1 à 7

9. Utilisation d'un dispositif statique ou mobile selon la revendication précédente avec une surface externe (22) d'un milieu (21) présentant un plan médian (23) dans laquelle, le premier chemin optique (11') pointant vers la surface externe (22) sous un premier angle d'incidence θ1 par rapport à la normale à la plan médian(23) de la surface (22) et le second chemin optique (12') pointant vers la surface externe (22) sous un second angle d'incidence θ2 par rapport à la normale à la plan médian(23) de la surface (22), les angles d'incidences θ1 et θ2 sont supérieurs à 1 degré, préférentiellement supérieurs à 5 degrés par rapport à la normale au plan médian (23) de la surface externe (22) du milieu (21) et les points géométriques d1 et d2 sont situés de part et d'autre du plan médian (23) de la surface externe (22).

10. Utilisation d'un dispositif statique ou mobile selon la revendication précédente avec une surface externe (22) d'un milieu (21) présentant un plan médian (23) dans laquelle, le premier chemin optique (11') pointant vers la surface externe (22) sous un premier angle d'incidence θ1 par rapport à la normale à la plan médian(23) de la surface (22) et le second chemin optique (12') pointant vers la surface externe (22) sous un second angle d'incidence θ2 par rapport à la normale à la plan médian(23) de la surface (22), le rapport entre les angles d'incidences θ1 et θ2 sur ladite surface externe (22) des premier (11) et second (12) chemins optiques est compris entre 1.2 et 1.8.

11. Utilisation d'un dispositif statique ou mobile avec une surface externe (22) d'un milieu (21) présentant un plan médian (23) selon la revendication précédente dans laquelle les premiers et seconds chemins optiques ne se croisent pas avant d'avoir atteint la surface externe (22).

12. Utilisation d'un dispositif statique ou mobile avec une surface externe (22) d'un milieu (21) présentant un plan médian (23) selon l'une des revendications 9 et 10, dans laquelle la longueur de cohérence du premier faisceau laser et ou du second faisceau laser est au moins supérieure à deux fois la plus grande longueur des premier (11) et second (12) parcours optiques incidents jusqu'à la surface externe (22) du milieu (21).

13. Utilisation d'un dispositif statique ou mobile avec une surface externe (22) d'un milieu (21) présentant un plan médian (23) selon l'une des revendications 9 à 11, dans laquelle les angle d'incidence θ1 du premier faisceau et θ2 du second faisceau de lumière sont compris dans un cône dont l'axe de révolution est la normale au plan médian (23) de la surface externe (22) et l'angle d'ouverture du cône est inférieur ou égal à 45 degrés, préférentiellement inférieur ou égal à 30 degrés.

**Patentansprüche**

1. System zur Erzeugung (1) wenigstens eines Signals, das für das Profil einer Außenfläche (22) eines Mediums (21) repräsentativ ist, die eine Mittelebene (23) aufweist und eine relative Geschwindigkeit V im Verhältnis zum System in einer Richtung U aufweist, umfassend:

- eine erste Lichtquelle (2), die geeignet ist, ein erstes Gauß-Bündel aus kohärentem und monochromatischem Licht, dessen Wellenlänge $\lambda_1$ an die optischen Absorptionseigenschaften des Mediums (21) angepasst ist, auszusenden, das einem ersten Strahlengang (11) folgt;
- einen ersten Sensor (3), der geeignet ist, die Wirkungen der elektromagnetischen Interferenzen zwischen einem Abschnitt des ersten ausgesendeten Lichtbündels und einem Abschnitt des auf der Außenfläche (22) des Mediums (21) rückgestreuten Bündels des ersten Lichtbündels zu bewerten, und ein elektrisches Signal liefert,
- wenigstens ein optisches Trennelement (4), das sich stromauf des ersten Sensors (3) befindet, das einen Abschnitt des ersten Lichtbündels umlenkt, der sich auf dem ersten Strahlengang (11) befindet, der andere Abschnitt des ersten Lichtbündels ist ein zweites Lichtbündel, das einem zweiten Strahlengang (12) folgt
- wenigstens eine Fokussierlinse (5, 6), die sich stromauf oder stromab des wenigstens einen optischen Trennelements (4) auf dem ersten und/oder zweiten Strahlengang (11, 12) befindet, die es ermöglicht, das gesamte Lichtbündel oder einen Abschnitt davon auf einen Fokussierabstand f zu fokussieren, und einen stromaufwärtigen optischen Weg (11', 12') definiert, und
- ein Mittel zum Leiten (7) des wenigstens einen zweiten Lichtbündels, das wenigstens einen Spiegel umfasst, der geeignet ist, wenigstens einen Abschnitt des zweiten optischen Wegs in Richtung des ersten optischen Wegs umzulenken, so dass die Länge des ersten optischen Wegs (11') von der Länge des zweiten optischen Wegs (12') verschieden ist,

wobei die zwei optischen Wege (11', 12') komplanar sind, die Kombination des Fokussierabstands (f1, f2) und des optischen Wegs (11', 12') für jedes Lichtbündel zwei gesonderte geometrische Punkte d1 und d2 definiert, die den Fokuspunkten jedes Lichtbündels entsprechen, der Abstand zwischen den geometrischen Punkten d1 und d2 größer als die größte Rayleighlänge des ersten und zweiten Gauß-Lichtbündels ist **und** die Richtungsvektoren des ersten und zweiten optischen Wegs (11', 12') einen Winkel θ von null definieren, der größer als oder gleich 3 Grad ist,

wobei das System geeignet ist, so angeordnet zu sein, dass:

    i. jeder Richtungsvektor des optischen Wegs (11', 12') einen Winkel von wenigstens 1 Grad bezogen auf die Normale zur Außenfläche (22) des Mediums (21) in der Richtung U bildet, und

ii. die zwei geometrischen Positionen (d1 und d2) die Mittelebene (23) der Außenfläche (22) des Mediums (21) einfassen.

2. System zur Erzeugung (1) wenigstens eines Signals, das für das Profil einer Außenfläche (22) eines Mediums (21) repräsentativ ist, nach Anspruch 1, wobei sich die Fokussierlinse (5) stromauf des optischen Trennelements (4) befindet.

3. System zur Erzeugung (1) wenigstens eines Signals, das für das Profil einer Außenfläche (22) eines Mediums (21) repräsentativ ist, nach Anspruch 1, wobei sich die erste Fokussierlinse (5) stromab des optischen Trennelements (4) auf dem ersten Strahlengang (11) befindet und sich eine zweite Fokussierlinse (6) stromab des optischen Trennelements (4) auf dem zweiten Strahlengang (12) befindet.

4. System zur Erzeugung (1) wenigstens eines Signals, das für das Profil einer Außenfläche (22) eines Mediums (21) repräsentativ ist, nach einem der Ansprüche 1 bis 3, wobei das Erzeugungssystem (1) eine elektronische Vorrichtung (9) am Ausgang des elektrischen Signals des ersten Sensors (3) umfasst, die einen elektronischen Verstärkungsschaltkreis umfasst.

5. System zur Erzeugung (1) wenigstens eines Signals, das für das Profil einer Außenfläche (22) eines Mediums (21) repräsentativ ist, nach einem der vorhergehenden Ansprüche, wobei der erste Sensor (3) in der Gruppe enthalten ist, die einen Phototransistor, eine Photodiode, ein Amperemeter und ein Voltmeter umfasst.

6. System zur Erzeugung (1) wenigstens eines Signals, das für das Profil einer Außenfläche (22) eines Mediums (21) repräsentativ ist, nach einem der vorhergehenden Ansprüche, wobei die Wellenlänge des ersten Lichtbündels zwischen 200 und 2000 Nanometer, vorzugsweise zwischen 400 und 1600 Nanometer beträgt.

7. System zur Erzeugung (1) wenigstens eines Signals, das für das Profil einer Außenfläche (22) eines Mediums (21) repräsentativ ist, nach einem der vorhergehenden Ansprüche, wobei die erste Lichtquelle eine Laserdiode ist.

8. Statische oder bewegliche Vorrichtung, die mit einem System zur Erzeugung (1) wenigstens eines Signals, das für das Profil einer Außenfläche (22) eines Mediums (21) repräsentativ ist, nach einem der Ansprüche 1 bis 7 ausgestattet ist.

9. Verwendung einer statischen oder beweglichen Vorrichtung nach dem vorhergehenden Anspruch mit einer Außenfläche (22) eines Mediums (21), die eine Mittelebene (23) aufweist, wobei, der erste optische Weg (11') mit einem ersten Einfallwinkel θ1 bezogen auf die Normale zur Mittelebene (23) der Fläche (22) in Richtung der Außenfläche (22) zeigend und der zweite optische Weg (12') mit einem zweiten Einfallwinkel θ2 bezogen auf die Normale zur Mittelebene (23) der Fläche (22) in Richtung der Außenfläche (22) zeigend, die Einfallwinkel θ1 und θ2 größer als 1 Grad, vorzugsweise größer als 5 Grad bezogen auf die Normale zur Mittelebene (23) der Außenfläche (22) des Mediums (21) sind und sich die geometrischen Punkte d1 und d2 beiderseits der Mittelebene (23) der Außenfläche (22) befinden.

10. Verwendung einer statischen oder beweglichen Vorrichtung nach dem vorhergehenden Anspruch mit einer Außenfläche (22) eines Mediums (21), die eine Mittelebene (23) aufweist, wobei, der erste optische Weg (11') mit einem ersten Einfallwinkel θ1 bezogen auf die Normale zur Mittelebene (23) der Fläche (22) in Richtung der Außenfläche (22) zeigend und der zweite optische Weg (12') mit einem zweiten Einfallwinkel θ2 bezogen auf die Normale zur Mittelebene (23) der Fläche (22) in Richtung der Außenfläche (22) zeigend, das Verhältnis zwischen den Einfallwinkeln θ1 und θ2 auf der Außenfläche (22) des ersten (11) und zweiten Strahlengangs (12) zwischen 1,2 und 1,8 beträgt.

11. Verwendung einer statischen oder beweglichen Vorrichtung mit einer Außenfläche (22) eines Mediums (21), die eine Mittelebene (23) aufweist, nach dem vorhergehenden Anspruch, wobei sich der erste und zweite optische Weg vor Erreichen der Außenfläche (22) nicht schneiden.

12. Verwendung einer statischen oder beweglichen Vorrichtung mit einer Außenfläche (22) eines Mediums (21), die eine Mittelebene (23) aufweist, nach einem der Ansprüche 9 und 10, wobei die Kohärenzlänge des ersten Laserbündels und oder des zweiten Laserbündels wenigstens größer als das Zweifache der größten Länge des ersten (11) und zweiten (12) einfallenden Strahlengangs bis zur Außenfläche (22) des Mediums (21) ist.

13. Verwendung einer statischen oder beweglichen Vorrichtung mit einer Außenfläche (22) eines Mediums (21), die eine Mittelebene (23) aufweist, nach einem der Ansprüche 9 bis 11, wobei der Einfallwinkel θ1 des ersten Lichtbündels und θ2 des zweiten Lichtbündels in einem Kegel enthalten sind, dessen Umdrehungsachse die Normale zur Mittelebene (23) der Außenfläche (22) ist und der Öffnungswinkel des Kegels kleiner als oder gleich 45 Grad, vorzugsweise kleiner als oder gleich 30 Grad ist.

**Claims**

1. System (1) for generating at least one signal representative of the profile of an outer surface (22) of a medium (21) having a median plane (23) and having a relative speed V with respect to the system in a direction U, comprising:

> - A first light source (2) able to emit a first Gaussian beam of coherent and monochromatic light, the wavelength $\lambda_1$ of which is adapted to the optical absorption characteristics of the medium (21), along a first optical path (11);
> - A first sensor (3) able to evaluate the effects of electromagnetic interference between a portion of the first emitted beam of light and a portion of the beam of light backscattered from the outer surface (22) of the medium (21) of the first beam of light, and delivering an electrical signal;
> - At least one optical splitter element (4) located upstream of the first sensor (3), redirecting a portion of the first beam of light located on the first optical path (11), the other portion of the first beam of light being a second beam of light following a second optical path (12);
> - At least one focusing lens (5, 6) located upstream or downstream of the at least one optical splitter element (4) on the first and/or the second optical path (11, 12) for focusing all or part of the beam of light at a focusing distance f and defining an upstream optical path (11', 12'), and
> - A means (7) for routing the at least one second beam of light, comprising at least one mirror able to redirect at least a portion of the second optical path in the direction of the first optical path such that the length of the first optical path (11') is different from the length of the second optical path (12'),
> wherein the two optical paths (11', 12') are coplanar, the combination of the focusing distance (f1, f2) and the optical path (11', 12') for each beam of light defines two distinct geometric points d1 and d2 corresponding to the focal points of each beam of light, the distance between the geometric points d1 and d2 is greater than the greatest Rayleigh length of the first and second Gaussian beams of light and the direction vectors of the first and second optical paths (11', 12') define an angle $\theta$ greater than or equal to 3 degrees,
> the system being able to be placed such that:
>
> > - each direction vectors of a optical path (11', 12') defines an angle of at least one degree with respect to the normal to the outer surface (22) of the medium (21) along the direction U,
- the two geometric positions d1 and d2 surround the median plan (23) of the outer surface (22) of the medium (21)

2. System (1) for generating at least one signal representative of the profile of an outer surface (22) of a medium (21) according to Claim 1, wherein the focusing lens (5) is located upstream of the optical splitter element (4).

3. System (1) for generating at least one signal representative of the profile of an outer surface (22) of a medium (21) according to Claim 1, wherein the first focusing lens (5) is located downstream of the optical splitter element (4) on the first optical path (11) and a second focusing lens (6) is located downstream of the optical splitter element (4) on the second optical path (12).

4. System (1) for generating at least one signal representative of the profile of an outer surface (22) of a medium (21) according to one of Claims 1 to 3, wherein the generation system (1) comprises an electronic device (9) at the output of the electrical signal from the first sensor (3), comprising an electronic amplifier circuit.

5. System (1) for generating at least one signal representative of the profile of an outer surface (22) of a medium (21) according to one of the preceding claims, wherein the first sensor (3) is contained within the group comprising a phototransistor, a photodiode, an ammeter and a voltmeter.

6. System (1) for generating at least one signal representative of the profile of an outer surface (22) of a medium (21) according to one of the preceding claims, wherein the wavelength of the first beam of light is between 200 and 2000 nanometres, preferably between 400 and 1600 nanometres.

7. System (1) for generating at least one signal representative of the profile of an outer surface (22) of a medium (21) according to one of the preceding claims, wherein the first light source is a laser diode.

8. Static or mobile device equipped with a system (1) for generating at least one signal representative of the profile of an outer surface (22) of a medium (21) according to one of Claims 1 to 7.

9. Use of a static or mobile device according to the preceding claim with an outer surface (22) of a medium (21) having a median plane (23), wherein, with the first optical path (11') pointing towards the outer surface (22) at a first angle of incidence θ1 with respect to the normal to the median plane (23) of the surface (22) and the second optical path (12') pointing towards the outer surface (22) at a second angle of incidence θ2 with respect to the normal to the median plane (23) of the surface (22), the angles of incidence θ1 and θ2 are greater than 1 degree, preferably greater than 5 degrees with respect to the normal to the median plane (23) of the outer surface (22) of the medium (21) and the geometric points d1 and d2 are located on either side of the median plane (23) of the outer surface (22).

10. Use of a static or mobile device according to the preceding claim with an outer surface (22) of a medium (21) having a median plane (23), wherein, with the first optical path (11') pointing towards the outer surface (22) at a first angle of incidence θ1 with respect to the normal to the median plane (23) of the surface (22) and the second optical path (12') pointing towards the outer surface (22) at a second angle of incidence θ2 with respect to the normal to the median plane (23) of the surface (22), the ratio between the angles of incidence θ1 and θ2 on said outer surface (22) of the first (11) and second (12) optical paths is between 1.2 and 1.8.

11. Use of a static or mobile device with an outer surface (22) of a medium (21) having a median plane (23) according to the preceding claim, wherein the first and second optical paths do not intersect before having reached the outer surface (22).

12. Use of a static or mobile device with an outer surface (22) of a medium (21) having a median plane (23) according to either of Claims 9 and 10, wherein the coherence length of the first laser beam and/or of the second laser beam is at least greater than twice the greatest length of the first (11) and second (12) incident optical paths to the outer surface (22) of the medium (21).

13. Use of a static or mobile device with an outer surface (22) of a medium (21) having a median plane (23) according to one of Claims 9 to 11, wherein the angles of incidence θ1 of the first beam and θ2 of the second beam of light are contained within a cone the axis of revolution of which is the normal to the median plane (23) of the outer surface (22) and the aperture angle of the cone is less than or equal to 45 degrees, preferably less than or equal to 30 degrees.

**FIG. 1**

**FIG. 2**

*Préparation des signaux*

Obtention de deux signaux temporels A et B pour une même ligne de lecture d'une surface externe

1000

Correction temporelle des signaux déphasés spatialement et temporellement

1001

Obtention de deux signaux temporels A et B pour le même point géométrique de la surface externe

1002

*Mise en forme des données*

Déterminer la fréquence Doppler de chaque signal A et B

2001

Echantillonner chaque signal A et B a une fréquence supérieure à 2 fois la fréquence Doppler pour obtenir un signal utile

2002

Filtrer chaque signal temporel autour de la fréquence Doppler

2003

Déterminer l'enveloppe de chaque signal temporel utile

2004

Nettoyer le bruit de speckle sur chaque enveloppe déterminée

2005

*Evaluation*

Combiner en relatif les enveloppes de chaque signal utile A et B pour obtenir une fonction F

3001

Déterminer le profil de la surface externe suivant la ligne de lecture à l'aide d'une calibration de la fonction F

3002

# FIG. 3

FIG. 4a

FIG. 4b

FIG. 4c

FIG. 4d

**FIG. 4e**

**FIG. 4f**

**EP 4 143 503 B1**

## RÉFÉRENCES CITÉES DANS LA DESCRIPTION

**Documents brevets cités dans la description**

- US 8751091 B2